# EUROPEAN PATENT SPECIFICATION

(11) **EP 4 021 871 B1**
(45) Date of publication and mention of the grant of the patent: **13.08.2025**
(21) Application number: 20858549.7
(22) Date of filing: 30.06.2020
(51) Int. Cl.: C05G 1/00, C05G 5/00, C05C 9/00, C05D 5/00

(54) **FERTILIZER GRANULATE CONTAINING MAGNESIUM, SULPHATE AND UREA**
MAGNESIUM, SULFAT UND HARNSTOFF ENTHALTENDES DÜNGEMITTEL
GRANULÉS D'ENGRAIS CONTENANT DU MAGNÉSIUM, DU SULFATE ET DE L'URÉE

(30) Priority: 28.08.2019 DE 102019006059
(43) Date of publication of application: 06.07.2022
(73) Proprietor: K+S Aktiengesellschaft, 34131 Kassel (DE); ShenZen K + S Trading Co., Ltd., Guangdong 518408 (CN)
(72) Inventor: BAUCKE, Guido, 36277 Schenklengsfeld (DE); DENG, LieYing, Shenzhen, Guangdong 518034 (CN); DIETRICH, Armin, 37299 Weissenborn (DE); DRESSEL, Stefan, 34128 Kassel (DE); FU, Chuanfeng, Shenzhen, Guangdong 518013 (CN); GUO, Yanliang, Shenzhen, Guangdong 518000 (CN); SCHERR, David, 36088 Huenfeld (DE); THENERT, Stefan, 36266 Heringen (DE); WALDMANN, Ludger, 48291 Telgte (DE); WIEBEL, Josef, 34128 Kassel (DE)
(74) Representative: Meissner Bolte Partnerschaft mbB
(86) International application number: PCT/CN2020/099469
(87) International publication number: WO 2021/036494

(56) References cited:
- CN-A- 110 041 114
- RU-A- 2015 152 878
- US-A1- 2014 360 239
- US-A1- 2016 046 534
- KENNETH HONER ET AL, ACS SUSTAINABLE CHEMISTRY & ENGINEERING, vol. 5, no. 10, 18 September 2017 (2017-09-18), US, pages 8546 - 8550, XP055578166, ISSN: 2168-0485, DOI: 10.1021/acssuschemeng.7b02621
- T TODOROV ET AL: "Magnesium Sulfate Hexaurea Hemihydrate", ACTA CRYSTALLOGRAPHICA SECTION C CRYSTAL STRUCTURE COMMUNICATIONS, 15 December 1998 (1998-12-15), pages 1758 - 1760, XP055623946, Retrieved from the Internet <URL:http://journals.iucr.org/c/issues/1998/12/00/na1345/na1345.pdf> [retrieved on 20190919], DOI: 10.1107/S0108270198007070

## Description

The present invention relates to fertilizer granulate containing magnesium, sulphate and urea, a process for their preparation and the use of the fertilizer granulate as fertilizers or in fertilizer mixtures.

Although at about 1.94% magnesium is the eighth most abundant element in the earth's crust, soils often lack magnesium. Therefore, magnesium salts are widely used as fertilizers or fertilizer additives. In particular, magnesium sulphate, often in the form of monohydrate, 5/4-hydrate or heptahydrate (Epsom salt), is used as a fertilizer or fertilizer additive. In this case, magnesium sulphate is typically used in the form of magnesium sulphate-containing granulate, optionally containing other macronutrients such as potassium, phosphorus or nitrogen and optionally micronutrients such as manganese, zinc, copper, iron, molybdenum or boron.

Often one would like to use magnesium sulphate together with urea as fertilizer. Thus, B. von Rheinbaben, Fertilizer Research 11 (1987) describes that the combined use of magnesium sulphate monohydrate and urea leads to a reduction in nitrogen loss. However, there are limits to the combined use of magnesium and urea. For instance, solid mixtures of magnesium sulphate granulate and urea are not stable in storage. Often after already a short time, a reaction occurs between the two constituents of the mixture and the ambient humidity, leading to the formation of pasty masses which also easily deliquesce and are, therefore, difficult to handle. These can no longer be used as fertilizers in solid form. Even when stored in dry conditions, caking of the mixture is observed after some time. These problems occur especially with granulate with a high urea content.

GB 1359884 proposes to use aqueous concentrates obtained by mixing a hydration water or crystallization water containing magnesium sulphate, e.g. Epsom salt (magnesium sulphate heptahydrate), with solid urea. However, liquid fertilizer compositions are less suitable for some applications than solid fertilizer compositions.

DE 1183058 describes the use of calcined kieserite for preparing granules. It is suggested to combine calcined kieserite with urea in a 1:1 weight ratio. The process does not result in stable granules. Moreover, the process for its production requires the preparation of kieserite which is time and energy consuming.

DE 3320181 describes fertilizer granules containing magnesium, sulphur and nitrogen in the form of the double salt magnesium ammonium sulphate of the formula MgSO₄ • (NH₄)₂SO₄ • x H₂O, where x is the amount of water and may be 0.

WO 2013/098367 proposes to solve the problem of providing a solid fertilizer composition of magnesium, sulphur and nitrogen by using magnesium sulphate and urea in the form of a complex compound [MgSO₄ • m CO(NH₂)₂ • n H₂O], wherein m is in the range of 0.9 to 1.1 and n is in the range of 2.9 to 3.1, wherein the compositions described therein being allowed to contain little or no free MgSO₄ and less than 10 wt% unbound/unreacted urea. Preparation is carried out by reaction of calcined magnesium sulphate (CMS) with urea.

A similar approach is pursued by WO 2014/096372, which describes compositions consisting essentially of a magnesium sulphate-urea complex compound of the formula [MgSO₄ • m CO(NH₂)₂ • p H₂O], wherein m is in the range of 0.9 to 1.1 and p is in the range of 1.9 to 2.1, or a mixture thereof with the corresponding trihydrate (p = 2.9 - 3.1).

The disadvantage is that the complex compounds must be prepared beforehand, and the reaction masses must be crushed. Spherical granulate cannot be produced this way. In addition, these compositions have only a low nitrogen content. It is also disadvantageous that CMS is needed for the production as a raw material, which has to be prepared by dehydration of kieserite at 450°C, which is energy-intensive. In addition, such products have a high proportion of fine particulate material, which is disadvantageous for a number of applications.

DD 270899 describes an N-Mg fertilizer granulate with a N : Mg ratio in the range of 2.6 : 1 to 8.6 : 1. For the preparation prilled urea is successively powdered with a fine particulate powder of magnesium sulphate heptahydrate, followed by a powder of anhydrous magnesium sulphate and finally a powdering agent such as bentonite. The process is complicated, and the products produced have a high dust content.

K. Honer, et al., ACS Sustainable Chem. Eng. 2017, 5(10), pp. 8546-7550 describe the preparation of calcium and magnesium sulphate urea compounds by milling urea with a calcium or magnesium sulphate hydrate. Among other things, the compound [MgSO₄ • 6 CO(NH₂)₂ • 0.5 H₂O] is described. In this case, the compositions are produced as powders on laboratory scale. The production of granulate is not possible in this way.

CN 110041114 describes a fertilizer granulate containing 35 to 65 wt% of magnesium sulphate and 28 to 65 wt% of urea and having a nitrogen content of 12 to 31 wt% and a magnesium content, calculated as MgO, in the range of 9 to 20 wt%. The granulate is obtained by mixing crushed urea and magnesiumsulfate with water in a high speed mixer while maintaining a temperature of 50 to 85°C for 3 to 20 minutes to achieve full contact of the components, extruding the mixture followed by ripening. Thereby, the components react to form the complex compound of the formula [MgSO₄ • CO(NH₂)₂ • m H₂O]. Unfortunately, the mechanical stability of the granulate is not satisfactory.

The invention is therefore based on the problem to provide appropriate granulate as fertilizers consisting essentially of magnesium in the form of a sulphate and urea, which do not, or only to a lesser extent, have the above-mentioned disadvantages of the magnesium-sulphate-nitrogen compositions according to prior art. In particular, the granulate should not deliquesce upon contact with atmospheric moisture and should have good mechanical properties, for example low abrasion and/or good hardness. These properties should also be ensured even for a high urea content of at least 20 wt%, calculated as nitrogen and with respect to the total weight of the granulate, or at mass ratios of nitrogen to sulphur of at least 1.8 : 1, in particular at least 2.0 : 1 and especially at least 2.2 : 1. Moreover, it is desirable to provide uniformly shaped granules, especially with a narrow grain spectrum, so that a more even application is possible. In addition, the granulate should be produced in a simple manner and also be amenable to large-scale production. In particular, the granulate should be prepared from raw materials that are easily and available and low priced. Furthermore, the granulate should have a reduced tendency towards NH₃ emissions.

Surprisingly, it has been found that a fertilizer granulate based on magnesium, sulphate and urea, which, with respect in each case to the total weight of the granulate, with a urea content of 20.0 to 38.0 wt%, calculated as elemental nitrogen, a magnesium content of 1.5 to 9.5 wt%, in particular 1.5 to 8.8 wt%, calculated as elemental magnesium, and a sulphate content, calculated as elemental sulphur, of 2.7 to 12.0 wt%, in particular 2.7 to 11.0 wt%, has advantageous mechanical properties, if at least a portion of the magnesium, the urea and the sulphate is present in the form of the crystalline phase of formula (I) and/or formula (II):

MgSO₄ • 6 NH₂-C(=O)-NH₂ • 0.5 H₂O (I)

MgSO_{4*}4 NH₂-C(=O)-NH_{2 *} H₂O (II),

and wherein 1 to 20 wt%, in particular 3 to 18 wt% and especially 5 to 15 wt% of the magnesium contained in the fertilizer granulate, calculated in each case as elemental magnesium, is present in the form of water-insoluble magnesium salts.

Accordingly, the present invention relates to a fertilizer granulate containing magnesium, sulphate and urea, with respect in each case to the total weight of the granulate, in the following quantities:
- Urea, in an amount of 20.0 to 38.0 wt%, in particular 21.0 to 36.0 wt% and especially 22.0 to 34.0 wt%, calculated as elemental nitrogen;
- magnesium in an amount of 1.5 to 9.5 wt%, in particular 1.5 to 8.8 wt%, more particularly 2.5 to 8.7 wt% and especially 3.0 to 8.6 wt%, calculated as elemental magnesium; and
- sulphate in an amount of 2.7 to 12.0 wt%, in particular 2.7 to 11.0 wt%, more particularly 2.8 to 10.8 wt% and especially 3.0 to 10.6 wt%, calculated as elemental sulphur,
wherein 1 to 20 wt%, in particular 3 to 18 wt% and especially 5 to 15 wt% of the magnesium contained in the fertilizer granulate, calculated in each case as elemental magnesium, is present in the form of water-insoluble magnesium salts.

According to the invention, at least a portion of the magnesium, the urea and the sulphate is present in the granulate in the form of at least one of the crystalline phases of formula (I) and/or formula (II).

The invention also relates to a process for preparing the fertilizer granulate according to the invention. The process comprises providing a salt mixture containing magnesium sulphate hydrate, a water insoluble magnesium salt and particulate urea, wherein the weight ratio of the total weight of magnesium salts to urea is in the range of 1.2 : 1 to 1 : 5, in particular in the range of 1.1 : 1 to 1 : 4, especially in the range of 1 : 1 to 1 : 3 and wherein 1 to 20 wt%, in particular 3 to 18 wt% and especially 5 to 15 wt% of the magnesium, with respect to the total quantity of the magnesium contained in the salt mixture and calculated in each case as elemental magnesium, is present in the form of water-insoluble magnesium salts, and subjecting the salt mixture to a granulation process in the presence of added water.

The invention has a number of advantages. For instance, even at high urea contents and thus at nitrogen contents of at least 20 wt%, in particular at least 21% by weight and especially at least 22% by weight, calculated as nitrogen and with respect to the total weight of the granulate, or at mass ratios of nitrogen to sulphur of at least 1.8 : 1, in particular at least 2.0 : 1 and especially at least 2.3 : 1, the granulate also possesses good mechanical properties, for example low abrasion and/or a good hardness. In addition, unlike mixtures of urea and known magnesium sulphate fertilizers, they also show no significant tendency to deliquesce or to cake even at such nitrogen levels. Furthermore, the granulate can be produced in a simple manner and is also amenable for large-scale production. In addition, the granulate according to the invention can be prepared from readily available raw materials such as urea, synthetic magnesium sulphate (SMS) or natural magnesium sulphate hydrates such as magnesium sulphate monohydrate (Kieserite) or magnesium sulphate dihydrate. The granulate according to the invention also shows a reduced tendency towards NH₃ emission after fertilization. Correspondingly, the granulate according to the invention is particularly appropriate as fertilizer or as a component in fertilizer compositions.

Accordingly, the invention also relates to the use of the granulate according to the invention as fertilizer or in fertilizer compositions. The invention also relates to a method for fertilizing soils, comprising applying a fertilizer granules according to the invention or a fertilizer composition containing a fertilizer granulate according to the invention to the soil being fertilized.

Here and in the following, the given amount of nitrogen refers to the amount of nitrogen calculated as elemental nitrogen, if not stated otherwise. Here and in the following, the given amount of magnesium refers to the amount of magnesium calculated as elemental magnesium, if not stated otherwise. Here and in the following, the given amount of sulphate refers to the amount of sulphate calculated as elemental sulfur, if not stated otherwise. Any values which refer to the total weight or total mass of the fertilizer granulate relate to the dry mass of the fertilizer granulate, i.e. to the mass of the fertilizer granulate containing not more than 1.5% by weight of unbound water, i.e. water which is not hydrate water. Any unbound water can be determined via Karl Fisher titration.

In the granulate of the invention the grains or granules, respectively, may have a spherical shape or they may be irregularily formed. Here and in the following, spherical means that the granulate grains have a regular shape which corresponds approximately to a sphere, wherein the maximum extent of the grain in a spatial direction usually does not differ by more than 30% of the volume equivalent diameter of the respective grain. The volume equivalent diameter is defined as the diameter of a geometric sphere with the same volume as the volume of the grain.

Here and in the following, the terms granules and grains are used synonymously and refer to the particles of the granulate.

The formulas CO(NH₂)₂ and NH₂-C(=O)-NH₂ are used here and in the following synonymously and stand for urea.

As already mentioned, the fertilizer granulate according to the invention comprises urea, magnesium and sulphate, wherein at least a portion of the magnesium, the urea and the sulphate is present in the form of the crystalline phase of formula (I) and/or formula (II).

The granulate according to the invention contains at least one of the crystalline phases of formulae (I) and (II). In the granulate of the invention, only one of the crystalline phases of the formulae (I) or (II) or both crystalline phases of the formulae (I) and (II) may be present. The crystalline phases of formulae (I) and (II) can be detected by X-ray powder diffractometry using a crushed or milled sample of the granules based on their characteristic reflections.

The crystalline phase of formula (I) in an X-ray powder diffractogram recorded at 25°C (Cu-K_{α}-radiation: λ = 1.5413 Å) has at least 3 and in particular at least 5 and especially at least 7 or all reflections at the d-values (lattice plane spacings) indicated in the following Table 1. Preferably, such an X-ray powder diffractogram has at least 3, in particular at least 5 and especially at least 7 of those reflections, whose relative intensity is larger than 8%, with respect to the intensity of the strongest peak (100% rel. intensity). In Table 1, the characteristic reflections of the crystalline phase of formula (I) are given as lattice spacings d (in Angstroms), which can be calculated from Bragg's 2θ-values.

**Table 1: d-values of the phase of formula (I)**

| **d-value (Å)*** | **Rel. intensity (%)** |
|---|---|
| **6.057** | **100** |
| **5.845** | **54** |
| **3.775** | **44** |
| 5.262 | 33 |
| 4.000 | 29 |
| 3.639 | 22 |
| 4.114 | 20 |
| 3.029 | 19 |
| 4.083 | 12 |
| 3.108 | 12 |
| 2.871 | 11 |

| | |
|---|---|
| * The first three d-values shown in Table 1 are typically always observed in a sample containing the phase. The relative intensities are to be understood as orientation only and refer to the most intense peak (100% peak). | |

The crystalline phase of formula (II) in an X-ray powder diffractogram recorded at 25°C (Cu-K_{α}-radiation: λ = 1.5413 Å) has at least 3 and in particular at least 5 and especially at least 7 or all reflections at the d-values (lattice plane spacings) indicated in the following Table 1. Preferably, such an X-ray powder diffractogram has at least 3, in particular at least 5 and especially at least 7 of those reflections, whose relative intensity is larger than 8%, with respect to the intensity of the strongest peak (100% rel. intensity). In Table 2, the characteristic reflections of the crystalline phase of formula (II) are given as lattice spacings d (in Angstroms), which can be calculated from Bragg's 2θ-values.

**Table 2: d-values of the phase of formula (II)**

| **d-value (Å)*** | **Rel. intensity (%)** |
|---|---|
| **6.145** | **100** |
| **4.010** | **91** |
| **3.938** | **76** |
| 7.876 | 62 |
| 6.589 | 57 |
| 5.064 | 55 |
| 3.540 | 52 |
| 4.460 | 42 |
| 3.323 | 39 |
| 2.944 | 37 |

| | |
|---|---|
| * The first three d-values shown in Table 2 are typically always observed in a sample containing the phase. The relative intensities are to be understood as orientation only and refer to the most intense peak (100% peak). | |

The total content of the crystalline phases selected from the phases of formulae (I) and (II) in the fertilizer granulate according to the invention is frequently at least 10 wt%, in particular at least 20 wt%, with respect to the total mass of the fertilizer granulate and can be up to 100 wt% of the fertilizer granulate. In particular, the total content of the crystalline phases of formulae (I) and (II) in the fertilizer granulate according to the invention is in the range of 10 to 90 wt%, in particular in the range of 20 to 80 wt%, with respect to the total mass of the fertilizer granulate. Accordingly, 10 to 100 wt%, often 10 to 90 wt%, in particular at least 20 to 80 wt% of the magnesium contained in the fertilizer granules in the form of the crystalline phases of formulae (I) and/or (II) is usually present. Accordingly, 10 to 100 wt%, often 10 to 90 wt%, in particular at least 20 to 80 wt% of the sulphate contained in the fertilizer granulate in the form of the crystalline phases of formulae (I) and/or (II) is usually present.

In the fertilizer granulate according to the invention, a part of the magnesium may not be present in any of the phases of formulae (I) or (II), not least due to production reasons. The magnesium not present in any of the phases of formulae (I) or (II) may be in the form of a magnesium sulphate hydrate, such as in the form of the monohydrate, i.e. in the form of Kieserite, or as 5/4 hydrate, or as a mixture of magnesium sulphate and one or more further salts of magnesium such as magnesium chloride or magnesium oxide. The magnesium in the granulate of the invention, which is not present in any of the phases of formulae (I) or (II), may also be in the form of a crystalline magnesium sulphate urea phase, which is different from the formulae (I) and (II), e.g. in the form of the crystalline phases of the formulae (III) and/or (IV):

MgSO_{4 *} NH₂-C(=O)-NH_{2 *} 2 H₂O (III);

MgSO_{4 *} NH₂-C(=O)-NH_{2 *} 3 H₂O (IV).

The crystalline phases of formulae (III) and (IV) can be detected by X-ray powder diffractometry using a crushed or milled sample of the granules based on their characteristic reflections. In Table 3, the characteristic reflections of the crystalline phases of formulae (III) and (IV) are given as lattice spacings d (in Angstroms), which can be calculated from Bragg's 2θ-values.

The fertilizer granulate according to the invention may also contain a portion of magnesium, which is not in the form of the phases of formulae (I) or (II), not least due to production reasons. Usually, the portion of magnesium, which is not present in any of the phases of formulae (I) or (II), is at least 10 wt%, in particular at least 20 wt%, but usually not more than 90 wt%, in particular not more than 80 wt%, more particularly 10 to 90 wt%, especially 20 to 80 wt%, with respect to the total amount of magnesium contained in the fertilizer granulate.

The fertilizer granulate according to the invention may contain a portion of magnesium in the form of a crystalline phase of the formulae (III) and/or of the formula (IV). Regarding the mechanical stability of the granulate, it is preferred, if the total amount of magnesium, which is in the form of the phases of formulae (III) and/or (IV), is not more than 20 wt%, in particular not more than 10 wt%, especially not more than 5 wt%, e.g. in the range from 1 to 5 wt%, with respect to the total amount of magnesium contained in the fertilizer granulate. The total amount of the crystalline phases of formulae (III) and/or (IV), is preferably not more than 10 wt%, in particular not more than 5 wt%, with respect to the total weight of the granulate. In particular, the crystalline phases of formulae (III) and/or (IV) are below detection limit.

In particular, a portion of the magnesium is present, usually at least 10 wt%, in particular at least 20 wt%, but usually not more than 90 wt%, especially 20 to 90 wt%, with respect to the total amount of magnesium contained in the fertilizer granules, in the form of magnesium sulphate monohydrate or magnesium sulphate 5/4-hydrate or as a mixture of magnesium sulphate monohydrate with magnesium sulphate 5/4-hydrate. Also small amounts of magnesium sulphate dihydrate may be present.

In a particular group 1 of embodiments, the fertilizer granulates according to the invention contain the crystalline phase of formula (I). In this group of embodiments, the content of the crystalline phase of formula (I) in the fertilizer granulate is typically in the range of 10 to 89 wt%, in particular in the range from 20 to 77 wt% or 20 to 65 wt%, with respect to the total mass of the fertilizer granulate. Accordingly, 10 to 100 wt%, often 10 to 89 wt%, in particular 15 to 77 wt% or 20 to 65 wt% of the magnesium contained in the fertilizer granules is usually present in the form of the crystalline phase of formula (I). Accordingly, 10 to 100 wt%, often 10 to 89 wt%, in particular 15 to 77 wt% or 20 to 65 wt% of the sulphur contained in the fertilizer granules is usually present in the form of the crystalline phase of formula (I). In this particular group 1 of embodiments, the amount of the crystalline phase of formula (II) is typically lower than the amount of the crystalline phase of the formula (I). Typically, the mass ratio of the crystalline phase of formula (II) to the crystalline phase of formula (I) is not more than 1 : 1.5, in particular not more than 1 : 2 or may be even 0, i.e. the amount of crystalline phase of formula (II) is below its limit of detection. In this group 1 of embodiments, the amount of the crystalline phase of formula (II) typically does not exceed 15 wt%, with respect to the total mass of the fertilizer granulate. The fertilizer granulate of group 1 of embodiments may addtionally contain at least one of the crystalline phases of the formula (III) and/or of the formula (IV). Regarding the mechanical stability of the granulate, it is preferred, if the total amount of magnesium, which is in the form of the phases of formulae (III) and/or (IV), is not more than 15 wt%, in particular not more than 10 wt%, with respect to the total amount of magnesium contained in the fertilizer granulate. The total amount of the crystalline phases of formulae (III) and/or (IV), is preferably not more than 10 wt%, in particular not more than 5 wt%, with respect to the total weight of the granulate. In particular, the crystalline phases of formulae (III) and/or (IV) are below detection limit.

In another particular group 2 of embodiments, the fertilizer granulates according to the invention contain the crystalline phase of formula (II). In this group of embodiments, the content of the crystalline phase of formula (II) in the fertilizer granulate is typically in the range of 10 to 89 wt%, in particular in the range from 20 to 77 wt% or 20 to 65 wt%, with respect to the total mass of the fertilizer granulate. Accordingly, 10 to 100 wt%, often 10 to 98 wt%, in particular at least 15 to 77 wt% or 20 to 65 wt% of the magnesium contained in the fertilizer granules is usually present in the form of the crystalline phase of formula (II). Accordingly, 10 to 100 wt%, often 10 to 89 wt%, in particular at least 15 to 77 wt% or 20 to 65 wt% of the sulphate contained in the fertilizer granulate is usually present in the form of the crystalline phase of formula (II). In this particular group 2 of embodiments, the amount of the crystalline phase of formula (I) is typically lower than the amount of the crystalline phase of the formula (II). Typically, the mass ratio of the crystalline phase of formula (I) to the crystalline phase of formula (II) is not more than 1 : 1.5, in particular not more than 1 : 2 or may be even 0, i.e. the amount of crystalline phase of formula (I) is below its limit of detection. In this group 2 of embodiments, the amount of the crystalline phase of formula (I) typically does not exceed 20 wt%, with respect to the total mass of the fertilizer granulate. The fertilizer granulate of group 2 of embodiments may addtionally contain at least one of the crystalline phases of the formula (III) and/or of the formula (IV). Regarding the mechanical stability of the granulate, it is preferred, if the total amount of magnesium, which is in the form of the phases of formulae (III) and/or (IV), is not more than 15 wt%, in particular not more than 10 wt%, with respect to the total amount of magnesium contained in the fertilizer granulate. The total amount of the crystalline phases of formulae (III) and/or (IV), is preferably not more than 10 wt%, in particular not more than 5 wt%, with respect to the total weight of the granulate. In particular, the crystalline phases of formulae (III) and/or (IV) are below detection limit.

The fertilizer granulate according to the invention contains a small portion of magnesium as water-insoluble magnesium salts. The amount of magnesium in the form of water-insoluble magnesium salts is in the range from 1 to 20 wt%, in particular 3 to 18 wt% and especially 5 to 15 wt%, with respect to the total amount of magnesium contained in the granulate. The water-insoluble magnesium salts are magnesium salts having a solubility in deionized water at 22°C of not more than 500 mg/L. They are in particular inorganic magnesium salts including, for example, magnesium oxide, magnesium carbonate, magnesium hydroxide, magnesium silikates, magnesium aluminates, magnesium alumosilicates and mixtures thereof. The total amount of magnesium in the form of water-insoluble magnesium salts in the granulate is typically in the range of 0.2 to 2 wt%, in particular 0.3 to 1.5%, based on the total weight of the granulate and calculated as elemental magnesium. The presence of magnesium in the form of water-insoluble magnesium salts improves the mechanical properties of the granulate and results in an increased burst strength and reduced abrasion. The amount of water-insoluble magnesium sulfate can be determined indirectly by first determining the total magnesium content. For this, a first portion of the crushed granule is completely dissolved in deionized water containing 1 wt% of nitric acid, and the amount of magnesium in the aqueous solution is determined by elemental analysis. Then, a second portion of the crushed granulate is dissolved in deionized water of pH 7 at 22°C for 24h with stirring. The insoluble matter is removed by filtration, and the amount of magnesium in the aqueous solution is determined by elemental analysis. Thus, the amount of soluble magnesium is determined. The difference between the total amount of magnesium and the amount of soluble magnesium is the amount of insoluble magnesium. Comparison with the total amount of magnesium contained in the granulate gives the relative amount of magnesium, which is present as water insoluble magnesium salts.

The fertilizer granules according to the invention can also contain a portion of the urea, which is not present in the form of the crystalline phases of formulae (I) and (II). The urea not present in any of the phases of formulae (I) or (II) is typically present in free/unbound form, i.e. in unreacted/non-reacted form. As pointed out above, a certain amount of urea can also be present in form of other crystalline magnesium sulphate-urea phases, which are different to formulae (I) and (II), e.g. in the form of the crystalline phases of the formulae (III) and/or (IV). Preferably, at least 10 wt%, in particular at least 20 wt%, especially at least 30 wt%, e.g. 10 to 100 wt%, in particular 20 to 90 wt% and especially 30 to 85 wt% of the urea contained in the fertilizer granulate is present in the form of the crystalline phases of formulae (I) and/or (II). The proportion of unbound/unreacted urea will usually not exceed 90 wt%, in particular 80 wt% and especially 70 wt% of the urea contained in the granulate and is, if present, in the range of 10 to 80 wt%, in particular 15 to 70 wt%, with respect to the total amount of urea contained in the granulate. The unbound/unreacted urea can be present in the granulate in a homogeneously distributed form.

Preferably, the granulate has a conglomerate structure. In this conglomerate structure, part of the urea contained in the granulate particles is present in the form of crystalline urea particles embedded in a matrix containing sulphate salts of magnesium and at least one of the crystalline phases of formulae (I) and (II) and optionally one or both of the crystalline phases of the formulae (III) and/or (IV). These urea particles typically have diameters in the range of 0.01 to 0.5 mm. In the matrix, the sulphate salts of magnesium are preferably magnesium sulphate hydrates such as magnesium sulphate monohydrate, magnesium sulphate 5/4-hydrate or a mixture of magnesium sulphate monohydrate with magnesium sulphate 5/4-hydrate. The water-insoluble salts of magnesium are likewise embededded in the matrix as small particles.

In the fertilizer granulate according to the invention, part of the sulphate may not be present in the form of any of the phases of formulae (I) or (II), not least due to production reasons. The sulphate not present in any of the phases of formulae (I) or (II) is typically in the form of a magnesium sulphate hydrate, in particular in the form of monohydrate and/or 5/4-hydrate and/or in the form of a crystalline phase of the formulae (III) or (IV).

Generally at least 10 wt%, in particular at least 20 wt%, but generally not more than 90 wt%, especially 20 to 90 wt%, with respect to the total amount of sulphate contained in the fertilizer granulate, is not present in the form of any of the phases of formulae (I) or (II). In particular, a portion of the sulphate is present, usually at least 10 wt%, in particular at least 20 wt%, but usually not more than 90 wt%, especially 20 to 90 wt%, with respect to the total amount of sulphate contained in the fertilizer granulate, in the form of magnesium sulphate monohydrate, as a mixture of magnesium sulphate monohydrate with magnesium sulphate 5/4-hydrate and/or in the form of a crystalline phase of the formulae (III) or (IV).

For the properties of the fertilizer granulate, it has proven advantageous if it contains sulphate and urea in such a ratio that the mass ratio of nitrogen to sulphur is in the range of 10.5 : 1 to 1.8 : 1, in particular in the range of 6.5 : 1 to 2 : 1, especially in the range of 5 : 1 to 2.3 : 1.

The constituents contained in the fertilizer granules according to the invention can be determined by standard analytical methods, for example with elemental analysis, e.g. by wet analysis or by atomic emission spectroscopy (e.g. by ICP-OES). Crystalline constituents other than the phases of formulae (I) or (II) can also be detected by X-ray powder diffractometry. For example, constituents such as unreacted urea and magnesium sulphate monohydrate can be identified in an X-ray powder diffractogram of the composition, recorded at 25°C (Cu-K_{α}-radiation: λ = 1.5413 Å), by means of the reflections given in the following Table 3, whereby for identification typically at least 3 of the indicated d-values with a relative intensity greater than 10% are used.

**Table 3: d-values of the other constituents of the fertilizer granulate**

| **Other Constituents** | **d-value (Å)** | **Rel. intensity (%)** |
|---|---|---|
| Urea | **4.010** | **100** |
| | **3.620** | **25** |
| | **3.040** | **30** |
| | 2.528 | 12 |
| | 2.422 | 10 |
| MgSO₄ • H₂O | **3.405** | **100** |
| | **4.815** | **75** |
| | **3.351** | **70** |
| | 3.313 | 70 |
| MgSO₄ • 5/4 H₂O | **3.370** | **100** |
| | **3.430** | **60** |
| | **3.230** | **50** |
| | 4.850 | 40 |
| | 3.170 | 40 |
| | 2.570 | 15 |
| MgSO₄ • NH₂-C(=O)-NH₂ • 2 H₂O | **6.937** | **100** |
| (Formula III) | **3.349** | **45** |
| | **3.157** | **43** |
| | 3.257 | 28 |
| | 3.364 | 25 |
| | 3.469 | 23 |
| | 4.940 | 19 |
| | 4.917 | 17 |
| | 2.605 | 12 |
| | 3.287 | 11 |
| | 2.621 | 8 |
| MgSO₄ • NH₂-C(=O)-NH₂ • 3 H₂O | **10.1656** | **100** |
| (Formula IV) | **3.3994** | **63** |
| | **3.8527** | **39** |
| | 4.0752 | 21 |
| | 2.9318 | 15 |
| | 2.7558 | 15 |
| | 4.2520 | 13 |
| | 3.0064 | 13 |
| | 4.8050 | 9 |
| | 3.2015 | 9 |

| | | |
|---|---|---|
| * Of the d-values given in Table 3, typically the first three values are always observed in a sample containing the respective phase. The relative intensities are to be understood as orientation only and refer to the most intense peak (100% peak). | | |

The relative proportions of the respective crystalline constituents can be estimated by means of X-ray powder diffractometry on the basis of reference diagrams.

According to the invention, the fertilizer granulate contains magnesium, sulphate and urea and optionally water, the total amount of magnesium, sulphate and urea generally being at least 80 wt%, e.g. 80 to 100 wt%, in particular 90 to 100 wt%, and especially 95 to 100 wt%, with respect to the total mass of the fertilizer granulate, minus any water contained therein.

Usually, the fertilizer granulate in addition to magnesium, sulphate and urea also contains water, wherein at least a part of the water is present in the form of crystallization water bound in the fertilizer granulate, for example as crystallization water in the phases of formulae (I) and /or (II), if present as crystallization water in the phases of formulae (III) and /or (IV) and as crystallization water in magnesium sulphate. The fertilizer granulate may also contain unbound water. The content of unbound water, i.e water not bound as crystallization water, of the fertilizer granulate can be determined in a manner known per se, e.g. by Karl Fischer titration. Preferably, the unbound water does not exceed 2 wt% and is typically in the range of 0.1 to 2.0 wt%, with respect to the total mass of the fertilizer granulate. Fertilizer granulates of the invention, which do not contain more 1.5 wt%, in particular not more than 1.0 wt% of unbound water are particularly preferred with respect to their storage stability. The unbound water can be deterined by Karl Fisher titration.

Furthermore, the fertilizer granulate according to the invention may also contain micronutrients, which are also referred to as trace elements. In addition to boron, these include the elements manganese, zinc, copper, iron and molybdenum. Trace elements may also be selenium, cobalt and iodine. Boron is present preferably as sodium calcium borate, e.g. in the form of ulexite, sodium borate, e.g in the form of borax pentahydrate, potassium borate or boric acid. The elements manganese, zinc, copper, cobalt, iron and molybdenum are typically present in the granulate in the form of their salts or complex compounds. Manganese, copper and zinc are present preferably in the form of their sulphates. Copper and iron may also be present in the form of chelates, e.g. with EDTA. Molybdenum is present preferably as sodium or ammonium molybdate or as a mixture thereof. Typically, the proportion of micronutrients other than boron, calculated in their elemental form, will not exceed 3 wt%, with respect to the total mass of the constituents of the magnesium sulphate granulate used according to the invention. The content of boron, calculated as B₂O₃, will generally not exceed 10 wt%, in particular 5 wt%, and is typically, if present, in the range from 0.01 to 10 wt%, in particular 0.1 to 5 wt%, with respect to the total mass of the components of the fertilizer granulate according to the invention. The total amount of micronutrients or trace elements is, if desired, in the range of 0.01 to 10 wt%, in particular in the range of 0.1 to 5.0 wt%, with respect to the total mass of the fertilizer granulate and calculated as elements.

Furthermore, the fertilizer granulate according to the invention may also contain bi-ostimulants (e.g. algae and plant extracts, products based on mineral and/or microbial base).

The fertilizer granulate according to the invention preferably has a small proportion of granules with a particle size or grain size of less than 1 mm. In particular, the proportion of granules with a particle size below 1 mm is less than 10 wt%, in particular less than 5 wt%. Frequently, at least 80 wt% and especially at least 90 wt% of the granules have a particle size of not more than 10 mm. The particle size distribution of the granules is preferably such that at least 70 wt%, in particular at least 80 wt% and especially at least 90 wt% have a particle size in the range from 1 to 10 mm, in particular in the range from 2 to 8 mm. However, the fertilizer granulate can also be present in the form of a so-called microgranulate. In such microgranulates, usually at least 80 wt% and especially at least 90 wt% of the granules have a grain size of a maximum of 3 mm, in particular a maximum of 2.5 mm. Preferably, the grain size of the granules in microgranulates is at least 70 wt%, in particular at least 80 wt% and especially at least 90 wt% in the range from 0.5 to 3 mm.

The particle size may depend on the production process. For example, a granulate obtained from an agglomeration process usually has a particle size distribution, wherein at least 70 wt%, in particular at least 80 wt% and especially at least 90 wt% have a particle size in the range of 1.0 to 6.0 mm, in particular in the range of 2.0 to 5.0 mm, a granulate obtained from an compaction process usually has a particle size distribution, wherein at least 70 wt%, in particular at least 80 wt% and especially at least 90 wt% have a particle size in the range of 2.5 to 10.0 mm, in particular in the range of 3.0 to 8.0 mm.

The particle sizes given here and below, which are also referred to as grain sizes, are generally those values, as determined by sieving analysis according to DIN 66165:2016-08. The determination of the mass fractions of the respective particle sizes or particle size ranges takes place in accordance with DIN 66165:2016-08 by fractionating the dispersed granulate using several sieves by means of mechanical sieving in pre-calibrated systems. Unless otherwise indicated, percentages in connection with particle or grain sizes are to be understood as statements in wt%. In this context, the d₉₀-value denotes that grain size that 90 wt% of the granules fall below. The d₁₀-value denotes that grain size that 10 wt% of the granules fall below. The grain size distribution of the fertilizer granulate according to the invention is accordingly characterized by a d₁₀-value of at least 1.5 mm and in particular of at least 2 mm and a d₉₀-value of not more than 10 mm.

The fertilizer granulate according to the invention is usually produced by subjecting a salt mixture containing a magnesium sulphate hydrate, a water insoluble magnesium salt and particulate urea in a weight ratio in the range of 1.2 : 1 to 1 : 5, in particular in the range of 1.1 : 1 to 1 : 4, especially in the range of 1 : 1 to 1 : 3 and optionally further constituents contained in the granulate to a granulation process in the presence of added water.

According to the invention, the process is carried out with the addition of water to at least partially achieve the conversion of the magnesium sulphate hydrate and the urea into the crystalline phase of formulae (I) or (II) and thus to achieve the desired strength of the granules.

According to the invention, the granulation of the salt mixture is carried out in the presence of water. The presence of the water causes a partial solubilization of the particles of the salt mixture, so that the urea reacts with the magnesium sulphate hydrate to form the crystalline phases of formulae (I) and/or (II) and optionally one more magnesium sulphate urea phases, e.g. the crystalline phases of formulae (III) and/or (IV). The amount of water will typically be chosen such that no complete dissolution of the salt mixture is achieved.

Typically, the total amount of water added to the salt mixture is in the range of 1.5 to 8 wt%, in particular in the range of 2 to 7 wt%, with respect to the mass of the urea used for granulation. Typically, the total amount of water in the salt mixture, i.e. the amount of added water and the hydrate water of the magnesium sulphate hydrate, is in the range from 3 to 15 wt%, in particular in the range from 4 to 13 wt%, with respect to the total mass of the salt mixture and added water.

Preferably, the main quantity of water used for the granulation is added to the salt mixture before or at the beginning of the granulation process. Preferably at least 50 wt%, in particular at least 80 wt%, or the total amount of water is added before or directly at the beginning of the granulation to the salt mixture. A subset of the water may also be added in the course of the granulation process.

Here, the magnesium sulphate hydrate in particularly is selected from synthetic magnesium sulphate hydrate (SMS), which already contains water-insoluble magnesium salts, and natural magnesium sulphate hydrates, which typically do not contain water-insoluble magnesium salts, such as magnesium sulphate monohydrate (Kieserite), magnesium sulphate 5/4-hydrate, magnesium sulphate dihydrate, magnesium sulphate trihydrate and mixtures thereof. Preference is given to natural or synthetic magnesium sulphate monohydrate and mixtures of magnesium sulphate monohydrate with magnesium sulphate 5/4 hydrate. Particular preference is given to a magnesium sulphate hydrate which already contains a water-insoluble magnesium salt, e.g. in the form of water-insoluble magnesium oxide or magnesium carbonate. In particular, the proportion of water-insoluble magnesium, with respect to the total mass of the magnesium sulphate hydrate and calculated as MgO is in the range of 1.0 to 10 wt%, preferably in the range of 1.5 to 7.0 wt%, especially in the range of 1.7 to 6.0 wt%.

The composition of the salt mixture used in the granulation is usually chosen so that its gross composition, apart from water, corresponds to the overall composition of the granulate. Accordingly, the salt mixture is typically composed of preferably at least 80% by weight, and more preferably at least 90% by weight, e.g. from 80 to 100 wt%, in particular 90 to 100 wt%, with respect to the total mass of the salt mixture, minus any water contained therein, of magnesium sulphate hydrate, water insoluble magnesium salt and urea.

The magnesium sulphate hydrate may, in principle, be naturally occurring magnesium sulphate monohydrate, also termed kieserite, or a synthetically prepared magnesium sulphate hydrate having about 0.9 to 1.5 mol of hydrate water per mol magnesium. Synthetically prepared magnesium sulphate hydrate is preferably used for preparing the fertilizer granulate of the present invention, and hereinafter it is also referred to as synthetic magnesium sulphate hydrate or SMS for short.

The water-insoluble magnesium salts are magnesium salts having a solubility in deionized water at 22°C of not more than 500 mg/L. They are in particular inorganic magnesium salts including, for example, magnesium oxide, magnesium carbonate, calcium magnesium carbonate (dolomite), magnesium hydroxide, magnesium silikates, magnesium aluminates, magnesium alumosilicates and mixtures thereof. The water-insoluble magnesium sulphate may be provided to the salt mixture as a separate component, but it may also be provided as an intimate mixture with the magnesiumsulphate hydrate.

Synthetic magnesium sulphate hydrate is understood as meaning a magnesium sulphate hydrate, which is obtainable by reaction of caustic magnesium oxide or magnesium carbonate with sulphuric acid in a sub-stoichiometric amount, in particular with a 50 to 90 wt% aqueous sulphuric acid. Substoichiometric amount means that the molar amount of sulphuric acid is somewhat lower than the molar amount of magnesium in the caustic magnesium oxide or magnesium carbonate and typically in the range of 0.80 mol to 99 mol, in particular 0.82 mol to 0.97 mol and especially 0.85 mol to 0.95 mol with respect to 1 mol of magnesium in the caustic magnesium oxide or magnesium carbonate, respectively. Caustic magnesium oxide is magnesium oxide obtained by calcination of magnesium carbonate.

SMS, in comparison to magnesium sulphate monohydrate from natural sources such as kieserite, usually contains lower amounts of halides and a water-insoluble magnesium in the form of water-insoluble magnesium salts, in particular salts selected from magnesium oxide, magnesium carbonate, calcium magnesium carbonate and magnesium hydroxide, mixtures thereof as well as mixtures thereof with magnesium silicates and/or magnesium aluminates or magnesium alumosilicates. In particular, the proportion of water-insoluble magnesium salts, with respect to the total mass of the SMS is in the range of 0.5 to 7.0 wt%, frequently 1 to 6 wt%, especially in the range of 1.5 to 5.0 wt%, calculated as MgO, or in the range of 0.3 to 4.2 wt%, frequently in the range of 0.6 to to 3.6 wt%, especially in the range of 0.9 to 3.0 wt%, calculated as elemental Mg. The proportion of magnesium in the form of water-insoluble magnesium salts is in the range of 1 to 20 wt%, in particular 3 to 18 wt% and especially 5 to 15 wt%, with respect to the total amount of magnesium contained in the SMS. Any relative weight given herein refers to the dry weight, i.e. the weight of the SMS after drying for 2 h and 1 bar at 105°C. The proportion of salts in the SMS, which are different from magnesium sulphate and magnesium oxide, is usually less than 3 wt%, in particular less than 2.5 wt%, with respect to the total mass of SMS. The total content of magnesium, i.e. the total amount of water-soluble and water-insoluble magnesium in the SMS is usually at least 24 wt%, in particular at least 26 wt%, calculated as MgO, and is often in the range of 24 to 30 wt%, in particular 26 to 29 wt%. Any relative amounts of magnesium in SMS given here refer to a relative amount with respect to the total amount of solids in SMS, i.e. the weight of the reaction mixture after drying at 100°C to constant weight. The chemical pulping of magnesium oxide with aqueous sulphuric acid is known per se and is described, for example, in CN 101486596 or CN 101624299. The aqueous sulphuric acid used for the reaction usually has an H₂SO₄ concentration in the range of 50 to 90 wt%, in particular in the range of 55 to 85 wt%.

In the SMS, the magnesium sulphate is present mainly as magnesium sulphate monohydrate, as a magnesium sulphate 5/4 hydrate or as a mixture of magnesium sulphate monohydrate with magnesium sulphate 5/4 hydrate, although small amounts of magnesium sulphate dihydrate may be included in the SMS. Preferably, the proportion of magnesium sulphate monohydrate and magnesium sulphate 5/4 hydrate in the SMS is at least 90 wt%, with respect to the total mass of the SMS. Particular preference is given to an SMS in which at least 90 wt% of the magnesium sulphate, with respect to the total amount of magnesium sulphate plus hydration water, is present as magnesium sulphate monohydrate. In particular, the content of crystallization water in the SMS is 12.0 to 16.0 wt%, with respect to the total mass of the SMS, and determined by thermogravimetric analysis in accordance with DIN EN ISO 11358-1/2013-03.

The magnesium sulphate hydrate used for granulation has a grain size distribution in which typically at least 80 wt%, in particular at least 90 wt%, of the salt grains of the magnesium sulphate hydrate have a particle size of not more than 1 mm, in particular not more than 0.5 mm and especially not more than 400 µm, determined by means of laser light diffraction according to ISO 13320:2009-10. Preferably, at least 80 wt% of the salt grains of the magnesium sulphate hydrate have a particle size in the range from 1 to 1000 µm, in particular in the range from 2 to 500 µm and especially in the range from 10 to 400 µm, determined by means of laser light diffraction according to ISO 13320:2009-10. The average grain size (weight average, d₅₀-value) of the magnesium sulphate hydrate used for agglomeration is typically in the range from 50 to 300 µm, in particular in the range from 85 to 250 µm. The maximum d₉₀-value of the magnesium sulphate hydrate used for the agglomeration is generally at most 900 µm and especially at most 400 µm.

The urea used in granulation can, in general, be used in any solid form desired. Typically, the urea used will be in prilled form or in the form of ground prills. Such urea prills generally have a urea content of at least 95 wt%, in particular at least 98 wt%. Frequently, the nitrogen content is about 44 to 48 wt%. The grain size of the solid urea in such a prill is typically in the range of 0.2 to 3 mm, i.e. at least 90 wt% of the prills have a grain size in this range. But the urea can also be ground before use in agglomeration to achieve better conversion. It has been proven to be advantageous if the ground urea has a grain size distribution, wherein typically at least 80 wt%, in particular at least 90 wt% of the urea grains have a grain size of not more than 1.5 mm and especially not more than 1.0 mm and preferably have grain sizes in the range of 1 to 1000 microns, and especially in the range of 2 to 500 microns, determined by laser light diffraction according to ISO 13320:2009-10.

The salt mixture used to prepare the fertilizer granulate typically contains magnesium sulphate hydrate, the water-insoluble magnesium salts and urea in a total amount of at least 80 wt%, in particular at least 90 wt% and especially at least 95 wt%, with respect to the total mass of the salt mixture minus any water contained therein, and optionally one or more micronutrients.

Furthermore, the salt mixture used for granulation may also contain organic binders, such as tylose, molasses, gelatin, starch, lignosulphonates or salts of polycarboxylic acids such as sodium citrate or potassium citrate, fatty acid salts such as calcium stearate or silicates, in particular phyllosilicates such as talc. The proportion of organic binders will typically not exceed 1 wt% and in particular is less than 0.5 wt%, in each case with respect to the total mass of the constituents of the salt mixture other than unbound water. If synthetic magnesium sulphate hydrate is used as the magnesium sulphate monohydrate, an organic binder can be dispensed with. In particular, the salt mixture used for the granulation contains no organic binders or not more than 0.1 wt%, in particular not more than 0.05 wt%, with respect to the total mass of the the constituents of the salt mixture other than unbound water. If kieserite is used as the magnesium sulphate monohydrate, it will be preferable to use an organic binder, in particular starch and especially wheat starch. In particular, the salt mixture used for granulation contains 0.1 wt% to 1 wt% of organic binder, with respect to the total mass of the constituents of the salt mixture other than unbound water.

The granulation is usually carried out at temperatures in the range of 20 to 80°C. Preferably, the temperature should not exceed 80°C. For the quality of the product it was found benefical that during the preparation the granulate or the salt mixture is subjected to a temperature in the range of 50 to 80°C, in particular in the range of 55 to 80°C. Preferably, such a temperature is maintained during granulation for at least 5 minutes, e.g. for a time period in the range of 5 min. to 12 h. This can be achieved, for example, if the granulation is carried out at temperatures in the range of 50 to 80°C, in particular in the range of 55 to 80°C, and/or the fresh product obtained in the granulation process is subjected to a heat treatment in the range of 50 to 80°C, in particular in the range of 55 to 80°C. The temperature data refer to the temperature of the salt mixture or to the temperature of the fresh granulate product, as it can be measured for example by means of an infrared sensor. If the granulation process is carried out at elevated temperature, the salt mixture and/or the water can be heated. Optionally, a higher temperature can be used at the beginning of granulation and reduced during the granulation process, wherein also from the beginning of granulation preferably a value of 80°C should not be exceeded in order to avoid or reduce conversion of the urea into biuret.

The actual implementation of granulation can be carried out analogously to the granulation processes known from the prior art, which are described, for example, in Wolf-gang Pietsch, Agglomeration Processes, Wiley-VCH, 1st Edition, 2002, in G. Heinze, Handbuch der Agglomerationstechnik, Wiley-VCH, 2000 and in Perry's Chemical Engineers' Handbook, 7th Edition, McGraw-Hill, 1997, 20-73 to 20-80. Here and in the following the terms agglomeration and granulation are used synonymously.

According to one group A of embodiments, the granulation is carried out by an agglomeration process. In the granulation by means of agglomeration, the particles of the salt mixture are set in motion during the granulation process and treated with water. As mentioned above, the water causes at the very least a partial solubilisation of the particles of the salt mixture, so that the urea reacts with the magnesium sulphate hydrate to form the crystalline phases of formulae (I) and/or (II) and optionally one more magnesium sulphate urea phases, e.g. the crystalline phases of formulae (III) and/or (IV). In addition, the water causes the particles of the salt mixture to agglomerate into larger particles, since by the presence of water liquid bridges can be formed between the particles of the salt mixture, which lead to adhesion of the particles. At the same time, the forced movement of the particles and the associated kinetic energy of larger agglomerates promotes the formation of comparatively uniformly-sized agglomerates with a spherical geometry. As the liquid bridges contain the dissolved components of the salt mixture, they will form solid material upon drying of the moist granules, thereby increasing the adherence between the particles of the salt mixture, which form the grains and thus increasing the mechanical strength of the grains.

In this context, it has proven to be advantageous if the agglomeration of group A of embodiments is carried out in such a way that in the course of the agglomeration the reaction mixture is present temporarily in viscid state, i.e. in viscous form, in particular at least at the beginning of agglomeration. Furthermore, it has proved to be advantageous if the constituents of the salt mixture are present at least partially in dissolved form at the beginning of agglomeration. This can be achieved by the way in which the water is added, by the choice of the amount of water and the temperature.

It has been found to be advantageous if the salt mixture is charged initially, and to add at least one subset, preferably at least 50 wt%, in particular at least 80 wt%, or the total amount of water directly at the beginning of the agglomeration. A subset of the water may also be added in the course of the agglomeration.

The agglomeration, in particular the mixed agglomeration, preferably takes place at temperatures in the range from 55 to < 80°C, in particular in the range from 65 to < 80°C. These temperature data refer to the temperature of the salt mixture, as it can be measured, for example, by means of an infrared sensor. Optionally, the reaction mixture can be heated. Optionally, a higher temperature can be used at the beginning of agglomeration and reduced during the agglomeration process, wherein also from the beginning of agglomeration preferably a value of 80°C should be maintained or should not be exceeded.

In this context, it has proven to be advantageous for the strength of the granulate if at least a part, in particular at least 40 wt% of the water contained in the reaction mixture is removed by evaporation during the agglomeration and/or during an optionally subsequent maturing phase, so that the granulate immediately after its preparation has an unbound water content of not more than 5 wt%, in particular not more than 2 wt%, especially not more than 1.5 wt%, determined by Karl Fischer titration.

Agglomeration can be carried out, for example, as a roll, mixed or fluidized bed agglomeration. Also appropriate are combinations of these measures, e.g. a combination of mixed and roll agglomeration or a combination of roll, mixed and fluidized bed agglomeration. The agglomeration according to the invention preferably comprises a mixed agglomeration in an intensive mixer, especially in an Eirich mixer.

In the case of mixed agglomeration, the particulate salt mixture previously moistened with at least one subset, in particular the main amount and especially the total amount of water, is added to an intensive mixer, especially an Eirich mixer, i.e. in an intensive mixer type as sold by the company Maschinenfabrik Gustav Eirich GmbH & Co KG. An intensive mixer typically comprises a container having an inclined axis of rotation and a circular cross-section, which preferably features further components that promote mixing, in particular at least one mixing tool, especially at least one rotating mixing tool, and optionally one or more fixed components, e.g. scraper. By rotating the container, the particles of the salt composition are set in motion and the granulation process is initiated. When adding water to the salt mixture, as a rule, the formation of irregularly shaped agglomerates starts to occur, which are then converted into more regularly shaped agglomerates/granules during mixed agglomeration. In general, mixed agglomeration occurs at the above mentioned temperatures. In the case of mixed agglomeration, it has proven to be advantageous to work initially at a higher temperature, but preferably < 80°C, and to reduce the temperature in the course of agglomeration, e.g. by up to 25°C. Preferably, a partial amount of the water used in the beginning is removed again during the mixed agglomeration, for example by means of an air stream.

According to another group B of embodiments the granulation is carried out by a compaction process in the presence of water.

For the purposes of the invention, the term "compaction" refers to the production of granules comprising a step, where pressure is excerted on the salt mixture. Compaction may be achieved simply by pressing or by briquetting described in more detail below.

Typically, the compaction granulation comprises the steps of mixing the magnesium sulphate hydrate, the particulate urea and water, followed by subjecting the obtained mixture to a compaction granulation to obtain granules. Preferably, the obtained granules are subjected to a subsequent heating step.

In order to achieve an even distribution of the components of the salt mixture within the grains of the granulate, the urea and the magnesium sulphate hydrate are mixed in a mixing device, especially in an intensive mixer. For this purpose, the finely divided raw materials, i.e. urea and the magnesium sulphate hydrate, are fed into the mixing device, in particular an intensive mixer. For the purpose of the invention, the salt mixture is moistened by the addition of water. Typically, the main quantity of water used for the granulation is added to the salt mixture during mixing. Preferably at least 50 wt%, in particular at least 80 wt%, or the total amount of water is added to the salt mixture during mixing to the salt mixture.

The thus obtained moistened salt mixture is then subjected to a compaction process. In the compaction process, the particles of the moistened salt mixture are typically compacted by means of a press. Thereby a compacted material consisting essentially of the components of the moistened salt mixture is obtained. Depending on the type of compaction, the fine-particle components of the mixture are agglomerated to form coarse agglomerates or strip-like strands or flakes, respectively. Depending on the type of press agglomeration, the coarse-particle material obtained during compacting is then either crushed or separated. Basically all presses known for similar purposes are suitable for compacting, such as punch presses, extrusion presses, piercing presses and roller presses.

The compaction may be carried out at the temperature given above for the granulation. Preferably the temperature should not exceed 80°C. Typically, the compaction is carried out at a temperature in the range from 20 to 70°C. While heating of the salt mixture subjected to the compaction is not required, it may be beneficial to heat the salt mixture before or during compaction to a temperature in the range of at least 40°C, in particular at least 50°C, especially at least 55°C or at least 65°C, e.g. to a temperatature in the range of 40 to 80°C, in particular in the range 50 to 80°C, in particular in the range of 55 to 80°C or 65 to 80°C. The fresh product obtained in the compaction process is preferably subjected to a heat treatement in the range of of 50 to 80°C, in particular in the range of 55 to < 80°C. This heat treatment is also termed maturation and described hereinafter.

Preferably, compacting of the moistened salt mixture is carried out using a roller press. In roller presses, compaction takes place in the gap between two rollers rotating in opposite directions. The roller surfaces can be smooth, profiled, e.g. corrugated, waved, or equipped with mould troughs. Any profiling of the roll surface serves primarily to improve the feed ratio into the roll nip.

In a preferred subgroup B1 of group B of embodiments of the invention, compacting is carried out by means of a roller press, the rollers of which are equipped with mould cavities. Such rolling rolls are also called shaped rolls. Typical mould cavities have hemispherical, semi-ellipsoidal, semi-cylindrical or semi-cushioned geometries. The dimensions of the mould cavities are selected so that two mould cavities correspond approximately to the desired dimensions of the granules to be produced. Preferably, the mould cavities have a depth of about 1 to 4 mm. The radius or axis length of the circular or elliptical sectional area of the spherical or semi-ellipsoidal mould cavities with the roll surface is typically in the range of 2 to 10 mm, in particular 3 to 8 mm. The same applies to the edge lengths of the cut surfaces of the semi-cylindrical or semi-cushioned mould cavities with the roll surface.

In this way, a flake of preformed granules is obtained, which are connected to each other by thin webs. The granules preformed in this way are separated by the application of mechanical forces, e.g. by using a an impact crusher and/or a roll crusher, e.g. a spike roll crusher. From the thus obtained granulate, small particles, i.e. debris or fragments, may be removed, e.g. by sieving. The coarse partkels may be smoothed at the fracture surfaces, which is also referred to as mechanical rounding, filleting or rounding. This is typically done in a device suitable for rounding granules, for example a spheronizer or a drum screen. In this way, a uniformly shaped granulate is obtained with dimensions and shapes determined by the mould cavities. Examples of such shapes are spheres, ellipsoids, rods and pillow shapes, which are also referred to as mini-briquettes in the following. As a rule, 90% of the granules thus obtained have a grain size in the range of 2 to 10 mm, in particular 3 to 8 mm, determined by sieve analysis according to DIN 6165:2016-08.

During separation and rounding, dust is naturally produced in addition to the granulate, which corresponds to the chemical composition of the salt mixture. This dust can be partially or completely recycled into the raw material or into the salt mixture.

In another preferred subgroup B2 of group B of embodiemnts of the invention, compacting of the moistended salt mixture is carried out by means of a roller press, the rolls of which have a smooth or profiled roll surface. In this case, the primary agglomeration product is a flake-like or plate-like strand emerging from the roll nip, which is also referred to as a flake or schülpe, respectively. The pressing forces required for compaction, which are usually related to the roll width and specified as linear forces, are generally in the range of 1 to 75 kN/cm, in particular in the range of 2 to 70 kN/cm and refer to a diameter of 1000 mm and an average flake thickness of 10 mm. As a rule, the roll press is operated at a roll peripheral speed in the range of 0.05 to 1.6 m/s. In this way, flakes are usually obtained which are subjected to controlled crushing to adjust the particle size. The flakes can be crushed in a known manner, for example by crushing in suitable equipment, such as impact crushers, impact mills or roll crushers.

Actual granulation often follows a maturing phase. For this purpose, the freshly prepared fertilizer granulate, which is also referred to below as green granulate, remains at rest, i.e. stronger mechanical loads are avoided so that no further particle occurs. Here, the fertilizer granulate reaches its actual strength. Maturation typically occurs at elevated temperature, e.g. of at least 40°C, in particular at least 50°C more particularly at least 55°C or at least 65°C, but preferably at temperatures of not more than 80°C, in particular below 80°C, to avoid conversion of the urea, e.g. to biuret. Preferably, the maturation phase is performed at temperatures in the range of 40 to 80°C in particular in the range of 50to 80°C more particularly in the range of 55 to 80°C or in the range of 65 to 80°C. The duration of the maturation phase or the residence time of the granulate in the maturation phase is typically 5 min to 1 hr and especially 10 to 30 min. Typically, the granulate is allowed to cool down during the maturation phase. Cooling can be performed for example by an air stream. As a result additional water, released during cooling, is removed. Typically, the process will be such that the green fertilizer granulate discharged from the granulation device is transported via a so-called maturation belt to a classifier or to a cooling apparatus. It is also possible to classify the still warm granulate and then dry the fraction with the targeted grain size (good fraction or good grain) in an air stream.

As a rule, classification of the fertilizer granulate follows the actual granulation process, i.e. agglomeration and drying or compaction and drying, if necessary. Here, separation of the granulate occurs into granulate with the specified grain size, smaller granulate, i.e. fine fraction or undersized, and possibly coarser granulate, i.e. coarse fraction or oversizes. Specifically suitable is a granulate, in particular, in which at least 70 wt%, in particular at least 80 wt%, especially at least 90 wt% of the granulate particles have a grain size or a grain diameter in the range of 1 to 10 mm, in particular 2 to 8 mm. The classification can be performed by conventional methods, in particular by sieving.

The non-specification granulate material, the so-called return material, which is generated during classification, is usually recycled back into the process. Surprisingly, both the undersized and the oversized grains may be recycled to the process. The oversized grain is usually ground up to a particle size suitable for agglomeration prior to the recycling. However, it can also be supplied to another application.

The specification-compliant granulate thus obtained can be prepared in a conventional manner, e.g. packed and transported.

A typical system for large-scale production of fertilizer granulate according to the invention typically comprises separate reservoirs for urea and for the magnesium sulphate hydrate, and possibly another reservoir for micronutrients, which are connected via a common conveyor, such as a conveyor belt with a dosing hopper. A device for preheating the components of the salt composition, a so-called preheater, may be provided between the conveying device and the dosing hopper. The components of the salt composition are mixed in the conveying device and in the optional preheater. From the dosing hopper, the salt composition is then fed into the granulation apparatus, for example an intensive mixer, such as an Eirich mixer or a compaction device or a combination of an intensive mixer and a compaction device. The granulation apparatus typically comprises means for heating, means for cooling, e.g. for introducing cooling air, means for temperature control and means for supplying water in addition to means for feeding-in the salt composition and means for discharging the granulate. The granulate discharged from the granulation apparatus is then typically placed on a maturation band and transported to a classifier. In the classifier, the granulate is separated into the good grain, i.e. granulate with the targeted grain size, into undersized grain, i.e. granulate with a grain size smaller than the targeted size, and into oversized grain, i.e. granulate with a grain size larger than the desired size. The undersized grain is typically returned directly to the dosing hopper. The oversized grain can be returned as such in the dosing hopper. But the oversized granulate may also be ground and then the ground oversized granulate can be returned to the dosing hopper. The good grain is typically cooled in the air stream and then optionally packed.

The fertilizer granulate obtainable by the process according to the invention is distinguished by a sufficient strength for fertilizer granulate and, thus, by a lower sensitivity to mechanical stress, which could occur for example during storage or withdrawal or when handling or transporting the granulate. This manifests itself in less grain destruction and lower dust formation through abrasion, i.e. of particles with grain sizes below 1 mm. Therefore, granulate obtained according to the invention tends to cake to a lesser extent during storage, in particular under pressure, as may occur in heaps or when stored in silos. Surprisingly, the improved mechanical strength of the granulate is maintained even when stored for long periods of time, so that the mechanical stresses occurring during the removal or during the handling of the granulate obtained according to the invention lead to a lower grain destruction even after prolonged storage.

Another advantage of the fertilizer granulate according to the invention is that they have a low NH₃ emission, presumably because constituents of the granulate have a urease-inhibiting action. In other words, the urea contained in the granulate according to the invention is less degraded than conventional urea. Therefore, when using the granulate of the invention in fertilizer applications, it is generally possible to dispense with urease inhibitors or to reduce the quantity needed during application. In principle, however, it is possible to use the granulate according to the invention with urease inhibitors.

One object of the invention is therefore the use of a fertilizer granulate according to the invention as fertilizers or in fertilizer compositions.

One preferred embodiment is the use as fertilizers or in fertilizer compositions which have a reduced NH₃ emission after application. NH₃ emission is considered in comparison with a similar fertilizer granulate containing the same amount of urea. In the comparative fertilizer granulate, the urea is present preferably as conventional urea.

Reduced NH₃ emission is presumably based on the fact that the urea contained in the granulate according to the invention is less degraded by ureases than conventional urea.

The following figures and examples serve to illustrate the invention:
Figure 1: SEM image of a section of a representative granule from Example 2.
Figure 2: SEM image of a representative granule from Example 4.
Figure 3: SEM image of a representative granule from Example 5.
Figure 4: X-ray powder diffractogram of a crushed granule from Example 2.
Figure 5: X-ray powder diffractogram of a crushed granule from Example 4.
Figure 6: X-ray powder diffractogram of a crushed granule from Comp. Example 5.
Figure 7: X-ray powder diffractogram of a crushed granule from Example 24.
Figure 8: SEM image of a representative granule from Example 24.

The burst strength or breaking strength was determined with the aid of the tablet breaking strength tester model TBH 425D from the ERWEKA company on the basis of measurements on 56 individual granules of different particle size (fraction 2.5 - 3.15 mm), and the mean value was calculated. The force required to break the granule between the punch and plate of the breaking strength tester was determined. Granules with a burst strength > 400 N and those with a burst strength < 4 N were not included in averaging.

Abrasion values were determined by a rolling drum process/method according to Busch. For this purpose, 50 g of the granulate with a particle size fraction of 2.5 - 3.15 mm were placed together with 70 steel spheres (diameter 10 mm, 283 g) in a tumble drum of a commercially available abrasion tester, e.g. ERWEKA, model TAR 20, and rotated for 10 min at 40 rpm (revolutions per minute). Subsequently, the contents of the drum were sieved using a sieve with a mesh size of 5 mm, under which a sieve with a mesh size of 0.5 mm was positioned, for 1 min on a sieving machine (model Retsch AS 200 control). The sieved fine fraction corresponds to the abrasion.

X-ray powder diffractometry: The respective granulate was crushed with a mortar and a pestle into a powder. The ground granulate was subsequently examined by X-ray powder diffractometry. The X-ray powder diffractogram was recorded with a Bragg-Bren-tano process diffractometer, model D 8, from the Endeavor company, AXS (298 K, Cu-K_{α}-radiation: λ = 1.5413 Å), increment: 0,018385738, increment duration: 0.2 seconds, detector: Lynx Eye, reflection geometry in range 2θ = 8°- 70°. The specified lattice distances were calculated from the determined 2θ values.

The composition of the granulate was determined by the following methods:
N-determination: association method VDLUFA II.1 - Association of German Agricultural Analytic and Research Institutes e.V. (VDLUFA), 3.5.2.7 and association method VDLUFA II,1, 3.9.2*,
Mg / S determination: association method VDLUFA (K+S 0905.01),
Boron / zinc determination: DIN EN ISO 11885 (E22),
H₂O determination by Karl Fischer titration.

The amount of water-insoluble magnesium sulfate was determined indirectly by first determining the total magnesium content, by completely dissolving the crushed material in deionized water containing 1 wt% of nitric acid and the determining the amount of magnesium in the aqueous solution as above. Then, a second portion of the crushed material is dissolved in deionized water of pH 7 at 22°C for 24 h with stirring. The insoluble matter is removed by filtration and the amount of magnesium in the aqueous solution is determined by elemental analysis. The difference between the total amount of magnesium and the amount of soluble magnesium is the amount of insoluble magnesium.

The granulate was embedded in epoxy resin for sample preparation for the SEM or EDX examination. After curing of the two-component resin, the samples were ground planar using silicon carbide. The samples were not vaporised with electrically conductive layers.

The SEM images were taken with an EVO 50EP scanning electron microscope from the company CARL ZEISS SMT (SE detector, VPSE G3 detector, LM4Q BSD).

The EDX was performed with the "Noran System Six" microanalyser system with an LN₂-cooled detector with a resolution of 129 eV for MnK_{α} from the company Thermo. The system is integrated in the SEM.

For the preparation of the fertilizer granulate of examples 1 to 4 and 6 to 9, a synthetic magnesium sulphate monohydrate (SMS-1) was used, which was prepared in the following manner:
Calcined magnesite (MgO-content about 80 - 85%) was reacted with about 70 wt% aqueous sulphuric acid in a molar ratio Mg:H₂SO₄ of about 0.9. The product thereby obtained, with a temperature of about 115 - 120°C, was taken directly behind the mill of the reactor. The magnesium sulphate granulate thereby obtained had a total magnesium-content of at least 27 wt%, calculated as MgO, and a content of water-soluble magnesium of at least 25 wt%, calculated as MgO. The amount of water-insoluble magnesium salts was 2 wt%. The SMS thereby obtained contained less than 10 wt% of particles having a particle size < 2 microns and less than 10 wt% of particles having a particle size of > 250 microns (determined by laser light diffraction according to ISO 13320:2009-10).

For the preparation of the fertilizer granulate of comparative example 5, a mixture of two kieserite fractions was used in the mass ratio 1 : 1, comprising a fine (kieserite M) and a coarser (kieserite E) with the following particle size distributions: kieserite M contained less than 10 wt% of particles with a particle size < 5 microns and less than 10 wt% of particles having a particle size of > 250 microns (determined by laser light diffraction according to ISO 13320:2009-10). Kieserite E contained less than 10 wt% of particles with a particle size < 100 microns and less than 10 wt% of particles having a particle size of > 900 microns (determined by laser light diffraction according to ISO 13320:2009-10).

For the preparation of the fertilizer granulate of examples 12, 16, 20, 24, 25, 27, 28, 29, 32 and 33, a synthetic magnesium sulphate monohydrate (SMS-2) was used, which was prepared from calcined magnesite by analogy to SMS-1. It contained less than 10 wt% of particles having a particle size < 100 microns and less than 10 wt% of particles having a particle size of > 300 microns (determined by laser light diffraction according to ISO 13320:2009-10). The SMS-2 contained 2 wt% of water insoluble magnesium, calculated as MgO, and had a total magnesium content of 27 wt%, calculated as MgO.

For the preparation of the fertilizer granulate of example 36 and 37, a synthetic magnesium sulphate monohydrate (SMS-3) was used, which was prepared from calcined magnesite by analogy to SMS-1. It contained 90 wt% of particles having a particle size of mesh 40 - 60 (250 - 420 µm, determined by laser light diffraction according to ISO 13320:2009-10). The SMS contained 2.7 wt% of water insoluble magnesium, calculated as MgO, and had a total magnesium content of 27%, calculated as MgO.

In comparative examples 9, 13, 17, 21, 26, 30, 31, 34 and 35, a kieserite was used, which contained less than 10 wt% of particles with a particle size < 70 microns and less than 10 wt% of particles having a particle size of > 300 microns (determined by laser light diffraction according to ISO 13320:2009-10).

In comparative examples 11, 14, 18 and 22, a magnesium sulphate dihydrate was used, which contained less than 10 wt% of particles with a particle size < 70 microns and less than 10 wt% of particles having a particle size of > 300 microns (determined by laser light diffraction according to ISO 13320:2009-10).

In comparative examples 10, 15, 19 and 23, a magnesium sulphate trihydrate was used, which contained less than 10 wt% of particles with a particle size < 70 microns and less than 10 wt% of particles having a particle size of > 300 microns (determined by laser light diffraction according to ISO 13320:2009-10).

For urea, a commercially-available prilled urea was used with a nitrogen-content of 46 wt%. The prill was ground to a powder containing less than 10 wt% of particles having a particle size < 5 microns and less than 10 wt% of particles having a particle size of > 300 microns (determined by laser light diffraction according to ISO 13320:2009-10).

In Examples 6 and 8, a finely divided zinc sulphate monohydrate having a content of 35.0 wt% of zinc and a sulphur content of 17.0 wt% was used.

In Example 8, a commercially-available borax pentahydrate was used with a boron content of 14.0 wt%.

In Example 7, the boron source used was a calcined ulexite (CaNa[B₅O₆(OH)₆]·5 H₂O) with a boron content of 14.9 wt%.

The granulation described below in examples 1 to 8 (group A of embodiments) was performed in an intensive mixer from the company Maschinenfabrik Gustav Eirich GmbH & Co. KG (model intensive mixer R01), hereinafter known as "Eirich mixer". The Eirich mixer had a filling volume of 5 L. Per preparation about 2 to 2.5 kg of salt mixture were used.

### Example 1:

52.3 parts by weight of SMS-1 were placed in an intensive mixer from the Eirich company and heated to 75°C. This was followed by addition of 45.2 parts by weight of urea and mixing at a speed of 600 rpm for 5 minutes, initially adding 2.5 parts by weight of water in countercurrent. In this case, the mixture became increasingly liquid and had a viscid consistency. Subsequently, the stirring speed was reduced to 100 - 200 rpm to promote granulate formation. From this point on, the mixture was allowed to cool for a period of 10 min., and the excess water produced by the reaction was removed via a turbulent air stream. At temperatures below 60°C, the mass hardened to form a solid granulate.

Examples 2 to 8 were performed in an analogous manner but with a modified salt composition. The salt composition used in each case and the amount of added water are summarised in Table 4. The compositions of the granulate determined according to elemental analyses are listed in Table 5. The mechanical properties of the granulate obtainable according to the invention are summarised in Table 6.

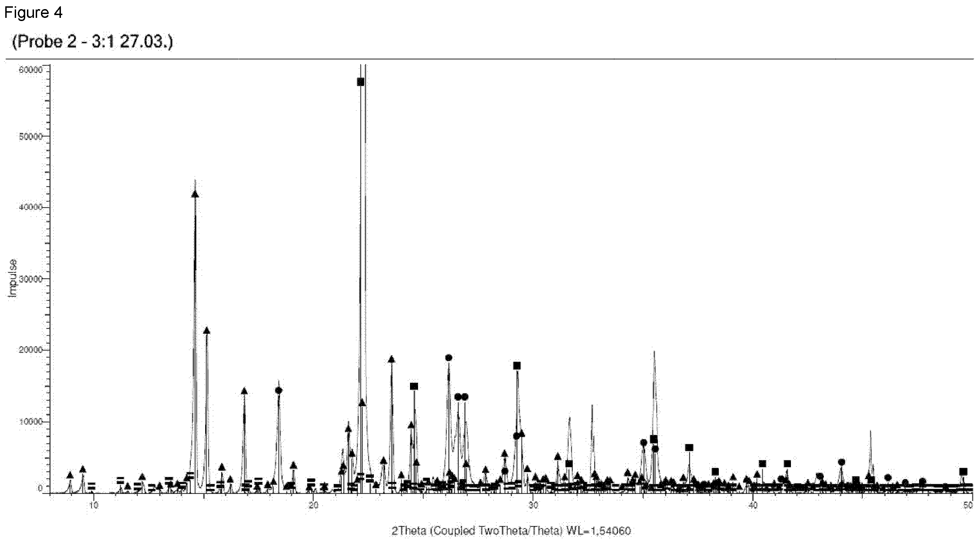

In all examples, the crystalline phase of formula (I) could be detected by X-ray powder diffractometry (see also Figs. 4 to 6).

**Table 4: feedstock materials/input materials**

| Example | Magnesium sulphate | | Urea | Water | Micronutrients | |
|---|---|---|---|---|---|---|
| | | [PBW]¹⁾ | [PBW] | [PBW] | | [PBW] |
| 1 | SMS-1 | 52.3 | 45.2 | 2.5 | -- | -- |
| 2 | SMS-1 | 42.2 | 54.8 | 3.0 | -- | -- |
| 3 | SMS-1 | 35.4 | 61.2 | 3.4 | -- | -- |
| 4 | SMS-1 | 17.3 | 78.5 | 4.2 | -- | -- |
| 5²⁾ | Kieserite | 40.5 | 57.0 | 2.5 | -- | -- |
| 6 | SMS-1 | 37.0 | 54.3 | 3.0 | ZnSO_{4*}H₂O | 5.7 |
| 7 | SMS-1 | 37.7 | 49.0 | 3.0 | calc. ulexite | 10.3 |
| 8 | SMS-1 | 38.8 | 53.5 | 1.5 | ZnSO_{4*}H₂O + Na₂B₄O_{7*}5 H₂O | 2.9 + 3.3 |

| | | | | | | |
|---|---|---|---|---|---|---|
| 1) PBW = parts by weight 2) Comparative Example | | | | | | |

**Table 5: Elemental composition of the granulate:**

| Example | Mg tot ¹⁾ [wt%] | Mg ws ²⁾ [wt%] | S [wt%] | N [wt%] | B [wt%] | Zn [wt%] |
|---|---|---|---|---|---|---|
| 1 | 8.51 | 7.88 | 10.40 | 20.79 | 0 | 0 |
| 2 | 6.88 | 6.37 | 8.40 | 25.20 | 0 | 0 |
| 3 | 5.76 | 5.34 | 7.04 | 28.16 | 0 | 0 |
| 4 | 2.81 | 2.61 | 3.44 | 36.12 | 0 | 0 |
| 5³⁾ | 6.60 | 6.60 | 8.73 | 26.19 | 0 | 0 |
| 6 | 6.02 | 5.58 | 8.33 | 24.98 | 0 | 2.00 |
| 7 | 6.15 | 5.69 | 7.51 | 22.52 | 1.53 | 0 |
| 8 | 6.20 | 5.74 | 7.58 | 22.73 | 0.50 | 1.00 |

| | | | | | | |
|---|---|---|---|---|---|---|
| 1) Mg tot: Magnesium, total 2) Mg ws: Magnesium, water soluble 3) Comparative Example | | | | | | |

**Table 6: Mechanical properties of the granulate:**

| Example | Burst strength [N] | Abrasion [%] |
|---|---|---|
| 1 | 45 | 0.1 |
| 2 | 40 | 0.1 |
| 3 | 39 | 0.1 |
| 4 | 34 | 0.3 |
| 5* | 20 | 0.2 |
| 6 | 42 | 0.1 |
| 7 | 51 | 0.4 |
| 8 | 47 | 0.4 |

| | | |
|---|---|---|
| * Comparative Example | | |

A SEM examination of a granulate from Example 2 gave the following result - see Fig-ure 1. The grain had a regular shape and was a conglomerate of several particulate components embedded in a matrix of another material. A cross section is shown in Fig- ure 1. The particulate components of the grain and the matrix were analysed for elemental composition by EDX. The components appearing evenly dark in the figure (arrow 1) were identified as urea due to the associated elemental composition. The particulate components (arrow 3) appearing white coloured were identified as magnesium sulphate monohydrate. The matrix consisted largely of the crystalline phase of formula (I) (arrow 2).

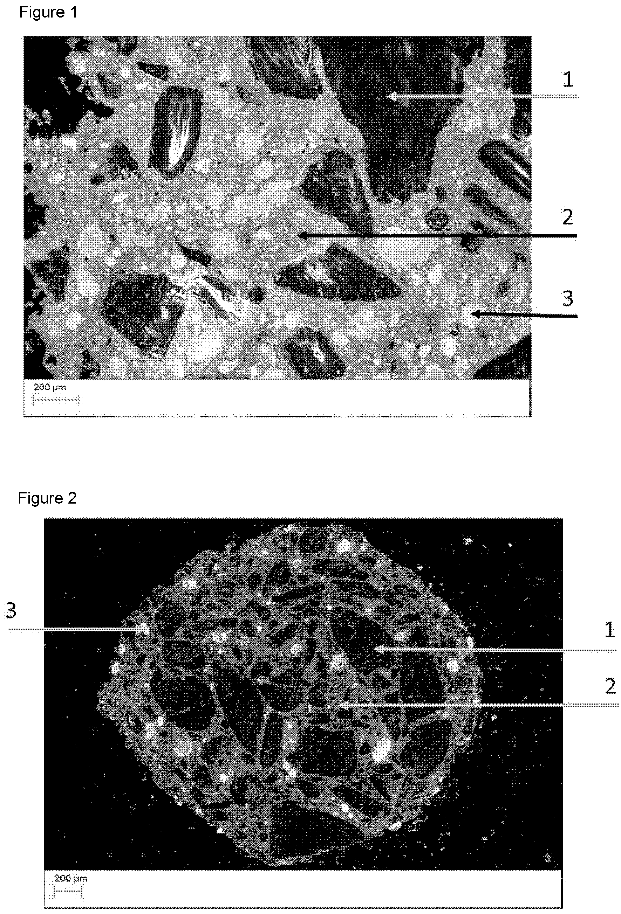

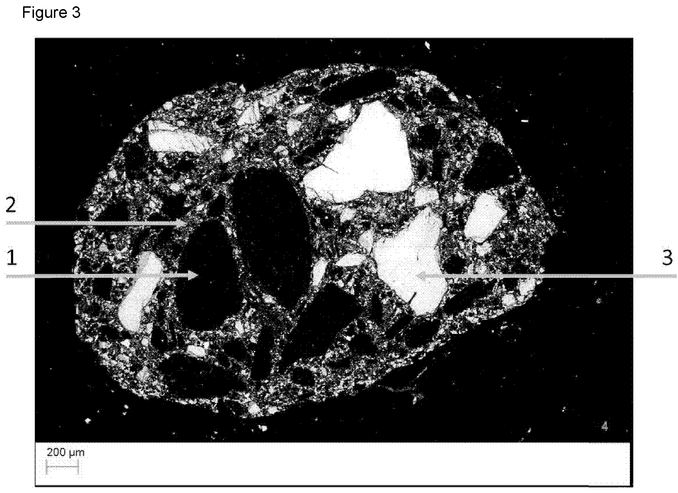

SEM studies of representative grains of Example 4 (Figure 2) and Example (5) (Figure 3) gave a result comparable to Example 2. In Figures 2 and 3, arrow 1 points to a region which, according to EDX analysis, consists essentially of urea. Arrow 2 indicates a region which, according to EDX analysis, consists essentially of the crystalline phase of formula (I) and arrow 3 indicates an area consisting essentially of magnesium sulphate monohydrate.

Fig. 4 shows an X-ray powder diffractogram taken from crushed granulate of Example 2. The presence of the crystalline phase of formula (I), urea and magnesium sulphate monohydrate (kieserite) was detected on the basis of the reflections characteristic of the respective phase.

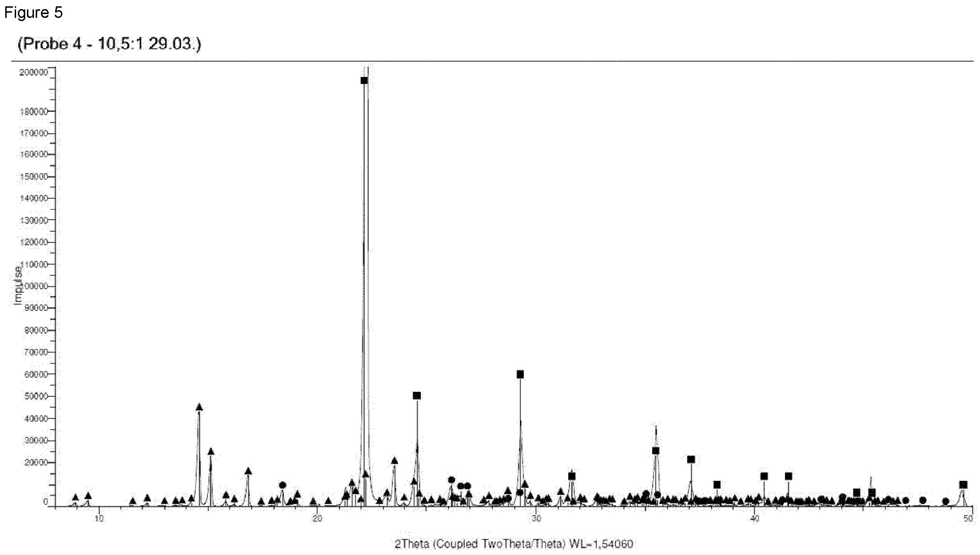

Fig. 5 shows an X-ray powder diffractogram taken from crushed granulate of Example 4. The presence of the crystalline phase of formula (I), urea and magnesium sulphate monohydrate (kieserite) was detected on the basis of the reflections characteristic of the respective phase.

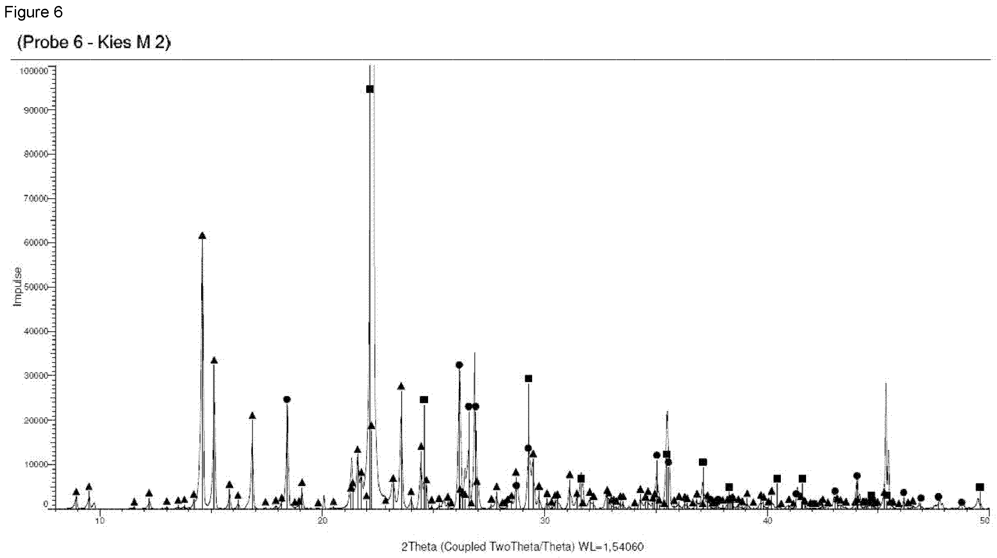

Fig. 6 shows an X-ray powder diffractogram taken from crushed granulate of Comparative Example 5. The presence of the crystalline phase of formula (I), urea and magnesium sulphate monohydrate (kieserite) was detected on the basis of the reflections characteristic of the respective phase.

In Figures 4 to 6, the reflections characteristic of the respective crystalline phase are indicated as follows:
**▲** Crystalline phase of formula (I)
■ Urea
• Magnesium sulphate monohydrate (kieserite)

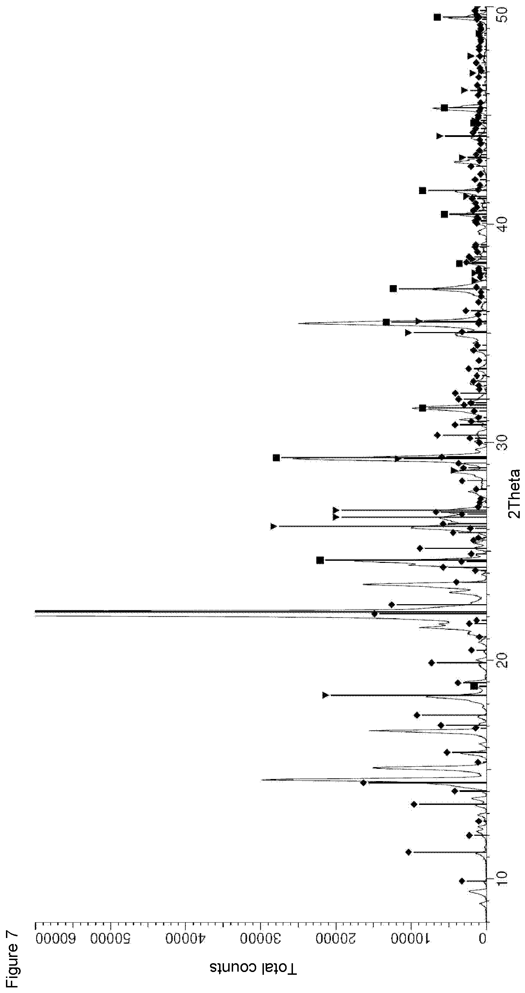

Fig. 7 shows an X-ray powder diffractogram taken from crushed granulate of Example 24. The presence of the crystalline phase of formula (II), urea and magnesium sulphate monohydrate (kieserite) was detected on the basis of the reflections characteristic of the respective phase.

In Figure 7, the reflections characteristic of the respective crystalline phase are indicated as follows:
◆ Crystalline phase of formula (II)
■ Urea
▼ MgSO₄·H₂O (Kieserite phase)

### Comparative Examples 9, 10, 11, 13, 14, 15, 17, 18, 19 and inventive examples 12, 16 and 20: Group A of embodiments

Examples 9 to 20 were carried out by analogy to the protocol of example 1 using a intensive mixer with a rotating mixer and a rotating barrel having an internal volume of 50 L and a hot air heating jacket. The rotating mixer was operated with a rotation speed of 800 rpm and the barrel with a rotating speed of 27 rpm. Urea and the respective magnesium sulphate hydrate were added to the barrel and heated to the temperature T1 given in Table 7. Heated water was added to the barrel at the beginning of the process. The mixture was mixed for mixing time tₘᵢₓ. At the end of the mixing excess water produced by the reaction was removed via a turbulent air stream. In examples 10 - 20 the granules were held for 6 - 12 h at the temperature T2.

The amounts of urea and added water, the type and amount of magnesium sulphate hydrate and the temperatures are given in the following Table 7:

**Table 7:**

| Ex. | Urea | MgSO₄ | | Water | | T1 | T2 | tₘᵢₓ |
|---|---|---|---|---|---|---|---|---|
| | [kg] | type ¹⁾ | [kg] | [%] ²⁾ | T [°C] | [°C] | [°C] | [min] |
| 9³⁾ | 5.0 | A | 5.0 | 4.90 | 60 | 68 | -- | 16.0 |
| 10³⁾ | 5.0 | B | 5.0 | 4.00 | 65 | 71 | 60 | 23.0 |
| 11³⁾ | 5.0 | C | 5.0 | 1.68 | 70 | 68 | 62 | 10.5 |
| 12 | 5.0 | D | 5.0 | 4.60 | 57 | 74 | 68 | 14.5 |
| 13³⁾ | 7.4 | A | 3.7 | 4.55 | 64 | 71 | 71 | 24.0 |
| 14³⁾ | 7.4 | C | 3.7 | 1.80 | 61 | 72 | 70 | 16.5 |
| 15³⁾ | 7.4 | B | 3.7 | 3.20 | 62 | 70 | 59 | 15.0 |
| 16 | 8.0 | D | 4.0 | 4.83 | 60 | 76 | 78 | 26.5 |
| 17³⁾ | 8.25 | A | 5.5 | 4.00 | 58 | 72 | 67 | 17.5 |
| 18³⁾ | 8.25 | C | 5.5 | 1.09 | 60 | 72 | 61 | 10.0 |
| 19³⁾ | 8.25 | B | 5.5 | 2.18 | 62 | 80 | 62 | 11.0 |
| 20 | 9.75 | D | 6.5 | 2.95 | 63 | 65 | 63 | 24.5 |

| | | | | | | | | |
|---|---|---|---|---|---|---|---|---|
| 1) A: kieserite; B: magnesium sulphate trihydrate; C: magnesium sulphate dihydrate; D: SMS-2 2) wt% of water with respect to the total amount of urea and magnesium sulphate hydrate 3) comparative examples containing less than 0.1 wt% of water-insoluble magnesium salts with respect to the total amount of magnesium, calculated was Mg. | | | | | | | | |

### Comparative Examples 21 to 23 and inventiven example 24:Group B1 of embodiments

The granulate was prepared according to the following protocol:
(1) In a heatable intensive mixer with a capacity as described for example 9 urea and magnesium sulphate were added at ambient temperature and intensively mixed for the mixing time given in table 8 with the desired amount of water having ambient temperature.
(2) Subsequently, the mixture was evenly fed into a laboratory press and compacted. A double roller press was used for this purpose, which had two counter-rotating rollers (diameter 140 mm, length 200 mm) with trough-shaped recesses (length 6 mm x width 6 mm x depth 1.6 mm). The press was operated with a roller speed of 72 rpm. The specific press force was individually adjusted for each test, taking care to obtain a uniform scabbing flakes, which was crushed by means of crusher followed by sieving to remove fines of a diameter below 2 mm. The salt mixture was fed by means of a plug screw arranged above the press rolls. The feed rate of mixture was about 10 to 20 kg/min.
(3) The mini briquettes obtained in step (2) were heated in a vented oven for 6 - 12 h to the temperature T3 given in Table 8.
(4) The heated briquetts were cooled to ambient temperature and subjected to grain separation and rounding of the individual grains .
(5) The material obtained in step (4) was then screened. The screening was carried out in the grain size range 4.5 - 5.6 mm, which represents the product fraction. The fraction with grain size < 4.5 mm can be fed back to the feed in step (2) (fine material). The fraction with grain size > 5.6 mm (coarse material) can be fed back into the step (4).

**Table 8:**

| Ex. | Urea | MgSO₄ | | Water | | T3 | tₘᵢₓ |
|---|---|---|---|---|---|---|---|
| | [kg] | type ¹⁾ | [kg] | [%] ²⁾ | T [°C] | [°C] | [min] |
| 21³⁾ | 10.0 | A | 5.0 | 2.33 | 25 | 70 | 16.0 |
| 22³⁾ | 10.0 | C | 5.0 | 2.00 | 25 | 70 | 23.0 |
| 23³⁾ | 10.0 | B | 5.0 | 1.33 | 25 | 70 | 10.5 |
| 24 | 15.0 | D | 7.5 | 2.22 | 25 | 70 | 14.5 |

| | | | | | | | |
|---|---|---|---|---|---|---|---|
| 1) A: kieserite; B: magnesium sulphate trihydrate; C: magnesium sulphate dihydrate; D: SMS-2 2) wt% of water with respect to the total amount of urea and magnesium sulphate hydrate 3) comparative examples | | | | | | | |

The granules obtained in examples/comparative examples 9 to 24 were analysed with X-ray powder diffractometry as described above. In each of the probes, the crystalline phase of the formula (II) was present. The intensity of the reflections indicated that the phase of the formula (II) was present in an amount of at least 10 wt% of the granulate. In addition, the characteristic reflections of crystalline urea were observed in each of the granules, indicating that non-reacted urea was present. In the granulate of examples 12, 16, 20 and 24 the kieserite phase was observed. In comparative Examples 9, 10, 11, 13, 14, 15, 17, 18, 19 the phase of formula (IV) was present in amounts of at least 10 wt% of the granulate, while it was absent or less pronounced in the granulates of inventive examples 12, 16 and 20.

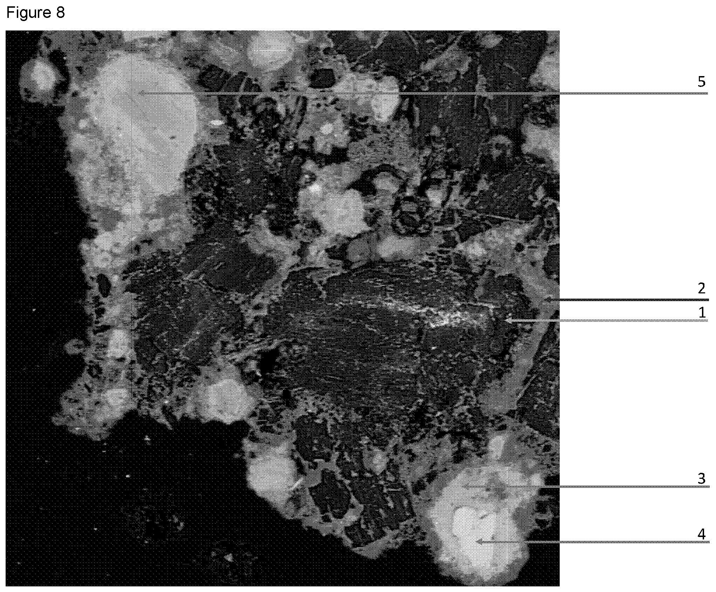

A SEM examination of a granulate from Example 24 gave the following result - see Fig-ure 8. The grain was a conglomerate of several particulate components embedded in a matrix of another material. A cross section is shown in Figure 8. The components of the grain and the matrix were analysed for elemental composition by EDX. The components appearing evenly dark in the figure (arrow 1) were identified as urea due to the associated elemental composition. The matrix consisted partly of the crystalline phase of formula (II) (arrow 2) and also of magnesium sulphate monohydrate (arrow 3). In addition, particles of Mg containing silicates (arrow 4) and MgO (arrow 5) were present.

### Examples 25, 27 to 29, 32, 33, 34, 36 and 37 and comparative examples 26, 30, 31, 34 and 35: Group B1 of embodiments

The granulate was prepared by analogy to the protocol of examples 21 to 24 using a large scale granulation equipment and a rotary heater and cooler for heating and cooling the granulate exiting the double roller press. The relative amounts of urea, magnesium sulphate hydrate and water, the mixing time and the heating temperature are summerized in Table 9.

**Table 9**

| Ex. | Type MgSO₄ ¹⁾ | Urea/ MgSO₄ | Water | | T3 | tₘᵢₓ |
|---|---|---|---|---|---|---|
| | | (w/w) | [%] ²⁾ | T [°C] | [°C] | [min] |
| 25 | D | 1:1 | 2-3 | 25 | 60-70 | 5 |
| 26⁴⁾ | A | 1:1 | 2-3 | 25 | 60-70 | 5 |
| 27 | D | 1:1 | 2 | 25 | 50 | 5 |
| 28 | D | 1:1 | 2 | 25 | 60 | 5 |
| 29 | D | 1:1 | 2 | 25 | 65 | 5 |
| 30³⁾ | A | 1:1 | 3 | 25 | 60 | 5 |
| 31³⁾ | A | 1:1 | 3 | 25 | 65 | 5 |
| 32 | D | 2:1 | 2-3 | 25 | 60-70 | 5 |
| 33 | D | 4:1 | 2-3 | 25 | 60-70 | 5 |
| 34³⁾ | A | 2:1 | 2-3 | 25 | 60-70 | 5 |
| 35³⁾ | A | 4:1 | 2-3 | 25 | 60-70 | 5 |
| 36 | D# | 1:1 | 2 | 25 | 60 | 5 |
| 37 | D# | 1:1 | 2 | 25 | 65 | 5 |

| | | | | | | |
|---|---|---|---|---|---|---|
| 1) A: kieserite; D: SMS-2 D#: SMS-3 2) wt% of water with respect to the total amount of urea and magnesium sulphate hydrate 3) comparative examples | | | | | | |

The granules obtained in examples/comparative examples 27 to 37 were analysed with X-ray powder diffractometry as described above. In each of the examples, the crystalline phase of the formula (I) was present, except for comparative example 34. In examples 27, 32, 33, 36 and 37 and in comparative example 34 a crystalline phase of the formula (II) was observed. The intensity of the reflections indicated that the phases of the formulae (I) and (II) were present in an amount of a least 5 wt% of the granulate. In addition, the characteristic reflections of crystalline urea were observed in each of the granules, indicating that each of theses phases were present in an amount of a least 10 wt% of the granulate. In comparative examples 31, 32, 34 and 35 the crystalline phases of formulae (III) and (IV) were clearly present, while they were absent or less pronounced in examples 27 to 29, 32, 33, 36 and 37. In the granulate of examples 27 to 29, 32 and 33 the kieserite phase was present.

**Table 10: Elemental composition**

| Example | Mg tot ¹⁾ [wt%] | Mg ws ²⁾ [wt%] | N [wt%] | S [wt%] | Moisture [wt%] |
|---|---|---|---|---|---|
| 25 | 9.20 | n.d. | 20.20 | n.d. ³⁾ | 0.9 |
| 26⁴⁾ | 7.90 | 7.90 | 22.70 | n.d. | 0.5 |
| 29 | 9.35 | 8.39 | n.d. | 10.83 | 0.2 |
| 31⁴⁾ | 8.24 | 8.24 | n.d. | 11.20 | 0.1 |
| 32 | 6.34 | 5.32 | n.d. | 7.27 | 0.4 |
| 33 | 4.06 | 3.52 | n.d. | 4.33 | 0.2 |
| 34⁴⁾ | 5.21 | 5.19 | n.d. | 6.87 | 0.1 |
| 35⁴⁾ | 3.51 | 3.49 | n.d. | 4.80 | 0.1 |

| | | | | | |
|---|---|---|---|---|---|
| 1) Mg tot: Magnesium, total 2) Mg ws: Magnesium, water soluble 3) n.d.: not determined 4) comparative examples | | | | | |

**Table 11: Mechanical properties of the granulate:**

| Example | Burst strength [N] | Abrasion [%] |
|---|---|---|
| 9²⁾ | 29 | n.d. ¹⁾ |
| 12 | 51 | n.d. |
| 13²⁾ | 25 | n.d. |
| 14²⁾ | 25 | n.d. |
| 16 | 41 | n.d. |
| 17²⁾ | 27 | n.d. |
| 20 | 43 | n.d. |
| 21²⁾ | 21 | n.d. |
| 22²⁾ | 16 | n.d. |
| 23²⁾ | 16 | n.d. |
| 24 | 24 | n.d. |
| 25 | 52 | n.d. |
| 26²⁾ | 22 | n.d. |
| 27 | 35 | n.d. |
| 28 | 32 | 1.4 |
| 29 | 31 | n.d. |
| 30²⁾ | 20 | n.d. |
| 31²⁾ | 21 | n.d. |
| 32 | 24 | 0.0 |
| 33 | 22 | 0.0 |
| 34²⁾ | 19 | 1.1 |
| 35²⁾ | 13 | 4.0 |
| 36 | 29 | 1.4 |
| 37 | 30 | 1.6 |

| | | |
|---|---|---|
| 1) n.d.: not determined 2) not according to the invention | | |

### Test procedure for determining the NH₃ emission of the granulate:

To determine the NH₃ emission of the granulate, a sample of the respective fertilizer was applied to a defined amount of soil in a sealable, airtight vessel (soil with 63 soil points as representative average, moisture of the soil was about 16 wt%). The lid of the vessel was a pierced rubber stopper through which a Dräger tube for detection of ammonia protruded into the interior of the vessel. Depending on the degree of NH₃ emission, a colour change from yellow to blue can be observed after some time with the Dräger tube due to the formation of ammonia as the decomposition product of the fertilizer. The height of the blue-coloured portion in the Dräger tube correlates with the amount of ammonia formed.

As a product according to the invention, the granulate from Example 2 was tested. As a reference, a sample of pure urea and a commercial urea-based fertilizer with urease inhibitor (UI) was used, each with the exact same total amount of urea as in the experiment with the granulate from Example 2. Comparison of all Dräger tubes showed that the largest total amount of ammonia formed when using pure urea as fertilizer. In the granulate from Example 2, an average ammonia formation was observed. The lowest amount of ammonia was found in the commercial fertilizer with UI admixture.

## Claims

1. Fertilizer granulate, which contains magnesium, sulphate and urea, each with respect to the total weight of the granulate, in the following quantities:
urea, in a quantity of 20.0 to 38.0 wt%, calculated as elemental nitrogen;
magnesium in a quantity of 1.5 to 9.5 wt%, calculated as elemental magnesium; and
sulphate in a quantity of 2.7 to 12.0 wt%, calculated as elemental sulphur;
wherein at least a portion of the magnesium, the urea and the sulphate is present in the form of at least one of the crystalline phases of the formulae (I) and (II)
MgSO_{4*}6 NH₂-C(=O)-NH_{2 *} 0.5 H₂O (I)
MgSO_{4*}4 NH₂-C(=O)-NH_{2 *} H₂O (II)
and wherein 1 to 20 wt% of the magnesium, with respect to the total quantity of the magnesium contained in the fertilizer granulate, calculated in each case as elemental magnesium, is present in the form of water-insoluble magnesium salts.

2. The fertilizer granulate according to claim 1, containing sulphate and urea in a ratio such that the mass ratio of nitrogen to sulphur is in the range of 1.8 : 1 to 10.5 : 1.

3. The fertilizer granulate according to claim 1 or 2, wherein a portion of the magnesium in the fertilizer granulate is present in the form of magnesium sulphate monohydrate, or in the form of magnesium sulphate 5/4-hydrate or as a mixture of magnesium sulphate monohydrate with magnesium sulphate 5/4-hydrate.

4. The fertilizer granulate according to any one of the preceding claims, wherein 3 to 18 wt% of the magnesium, with respect to the total quantity of the magnesium contained in the fertilizer granulate, calculated in each case as elemental magnesium, is present in the form of water-insoluble magnesium salts.

5. The fertilizer granulate according to any one of the preceding claims which has at least one of the following properties (a), (b), (c), (d) or (e):
(a) at least 10 wt% of the urea contained in the fertilizer granulate is present in the form of at least one of the crystalline phases of formulae (I) or (II);
(b) at least 70 wt% of the granule particles of the fertilizer granulate have a particle size in the range of 2 to 10 mm;
(c) the total amount of magnesium, sulphate and urea is at least 80 wt%, based on the total mass of the fertilizer granulate minus any water contained therein;
(d) the fertilizer granulate additionally contains a trace element from the group of boron, manganese, zinc, copper, iodine, selenium, cobalt, iron and molybdenum, preferably in a total amount of 0.1 to 5.0 wt%, with respect to the total mass of the fertilizer granulate,
(e) the fertilizer granulate does not contain more than 2% by weight of unbound water.

6. The fertilizer granulate according to any one of the preceding claims, wherein at least a portion of the urea in the granulate particles is present in the form of urea particles embedded in a matrix of sulphate salts of magnesium.

7. A process for producing a fertilizer granulate according to any one of the preceding claims, which comprises providing a salt mixture containing a magnesium sulphate hydrate, a water insoluble magnesium salt and particulate urea, wherein the weight ratio of the total weight of magnesium salts to urea is in the range of 1.2 : 1 to 1 : 5 and wherein 1 to 20 wt% of the magnesium, with respect to the total quantity of the magnesium contained in the salt mixture and calculated in each case as elemental magnesium, is present in the form of water-insoluble magnesium salts, and subjecting the salt mixture to a granulation process in the presence of added water.

8. The process according to claim 7, wherein the magnesium sulphate hydrate and the water insoluble magnesium salt are provided as a solid reaction mixture obtainable by reaction of a caustic magnesium oxide or magnesium carbonate with a sub-stoichiometric amount of sulfuric acid.

9. The process according to claim 8, wherein the reaction mixture contains the water-insoluble magnesium salts in an amount from 0.5 to 7 wt%, based on the total weight of the solid reaction mixture and calculated as MgO and/or wherein the salt mixture contains water-insoluble magnesium salts in an amount from 3 to 18 wt%, based on the total quantity of the magnesium contained in the salt mixture and calculated in each case as elemental magnesium.

10. The process according to any one of claims 7 to 9, which has at least one of the following features (f), (g), (h) or (i):
(f) the salt mixture consists of at least 80 wt%, with respect to the total mass of the salt mixture minus any water contained therein, of magnesium sulphate hydrate, the water insoluble magnesium salt and urea
(g) the main quantity of water is added to the salt mixture before or at the beginning of the granulation process;
(h) the amount of added water is 1.5 to 8 wt%, with respect to the mass of urea used for granulation;
(i) at least 80% of the particular urea has a particle size in the range from 1 to 1000 µm.

11. The process according to any one of claims 7 to 10, which is carried out as a press granulation of the salt mixture by means of a roller press in the presence of added water.

12. The process of claim 11, where the press granulation comprises providing the salt mixture containing a magnesium sulphate hydrate, a water insoluble magnesium salt and particulate urea by mixing, subjecting the obtained salt mixture to a compaction granulation to obtain granules and subsequently heating the granules and wherein the granules are preferably heated to a temperature in the range from 50 to 80°C.

13. The process according to any one of claims 7 to 10, which is carried out as a mixed agglomeration process using an intensive mixer, in particular an Eirich mixer.

14. The process according to claim 13, which has at least one of the following features (j), (k) or (I):
(j) the agglomeration is performed at a temperature in the range of 55 to 80°C;
(k) the agglomeration process is performed such that in the course of agglomeration the reaction mixture temporarily takes on a viscid form;
(l) at least a portion of the water contained in the reaction mixture is removed during agglomeration.

15. Use of a fertilizer granulate according to any one of claims 1 to 6 as fertilizer or in fertilizer compositions.

16. The use according to claim 15, wherein the NH₃ emission of the fertilizer granulate is reduced.

## Patentansprüche

1. Düngemittelgranulat, das Magnesium, Sulfat und Harnstoff, jeweils bezogen auf das Gesamtgewicht des Granulats, in den folgenden Mengen enthält:
Harnstoff in einer Menge von 20,0 bis 38,0 Gew.-%, gerechnet als elementarer Stickstoff;
Magnesium in einer Menge von 1,5 bis 9,5 Gew.-%, gerechnet als elementares Magnesium; und
Sulfat in einer Menge von 2,7 bis 12,0 Gew.-%, gerechnet als elementarer Schwefel;
wobei mindestens ein Teil des Magnesiums, des Harnstoffs und des Sulfats in Form mindestens einer der kristallinen Phasen der Formeln (I) und (II)
MgSO_{4 *} 6 NH₂-C(=O)-NH_{2 *} 0.5 H₂O (I)
MgSO_{4 *} 4 NH₂-C(=O)-NH_{2 *} H₂O (II)
vorliegt und wobei 1 bis 20 Gew.-% des Magnesiums, bezogen auf die Gesamtmenge des in dem Düngemittelgranulat enthaltenen Magnesiums, jeweils gerechnet als elementares Magnesium, in Form wasserunlöslicher Magnesiumsalze vorliegen.

2. Düngemittelgranulat nach Anspruch 1, enthaltend Sulfat und Harnstoff in einem solchen Verhältnis, dass das Massenverhältnis von Stickstoff zu Schwefel im Bereich von 1,8 : 1 bis 10,5 : 1 liegt.

3. Düngemittelgranulat nach Anspruch 1 oder 2, wobei ein Teil des Magnesiums in dem Düngemittelgranulat in Form von Magnesiumsulfatmonohydrat oder in Form von Magnesiumsulfat-5/4-hydrat oder als Gemisch von Magnesiumsulfatmonohydrat mit Magnesiumsulfat-5/4-hydrat vorliegt.

4. Düngemittelgranulat nach einem der vorhergehenden Ansprüche, wobei 3 bis 18 Gew.-% des Magnesiums, bezogen auf die Gesamtmenge des in dem Düngemittelgranulat enthaltenen Magnesiums, jeweils gerechnet als elementares Magnesium, in Form wasserunlöslicher Magnesiumsalze vorliegen.

5. Düngemittelgranulat nach einem der vorhergehenden Ansprüche, das mindestens eine der folgenden Eigenschaften (a), (b), (c), (d) oder (e) aufweist:
(a) mindestens 10 Gew.-% des in dem Düngemittelgranulat enthaltenen Harnstoffs liegen in Form mindestens einer der kristallinen Phasen der Formeln (I) oder (II) vor;
(b) mindestens 70 Gew.-% der Granulatpartikel des Düngemittelgranulats weisen eine Teilchengröße im Bereich von 2 bis 10 mm auf;
(c) die Gesamtmenge an Magnesium, Sulfat und Harnstoff beträgt mindestens 80 Gew.-%, bezogen auf die Gesamtmasse des Düngemittelgranulats abzüglich des etwaig darin enthaltenen Wassers;
(d) das Düngemittelgranulat enthält zusätzlich ein Spurenelement aus der Gruppe Bor, Mangan, Zink, Kupfer, Iod, Selen, Cobalt, Eisen und Molybdän, vorzugsweise in einer Gesamtmenge von 0,1 bis 5,0 Gew.-%, bezogen auf die Gesamtmasse des Düngemittelgranulats,
(e) das Düngemittelgranulat enthält nicht mehr als 2 Gew.-% ungebundenes Wasser.

6. Düngemittelgranulat nach einem der vorhergehenden Ansprüche, wobei mindestens ein Teil des Harnstoffs in den Granulatpartikeln in Form von Harnstoffpartikeln, die in eine Matrix von Sulfatsalzen von Magnesium eingebettet sind, vorliegt.

7. Verfahren zur Herstellung eines Düngemittelgranulats nach einem der vorhergehenden Ansprüche, bei dem man ein Salzgemisch, das ein Magnesiumsulfathydrat, ein wasserunlösliches Magnesiumsalz und teilchenförmigen Harnstoff enthält, wobei das Gewichtsverhältnis des Gesamtgewichts von Magnesiumsalzen zu Harnstoff im Bereich von 1,2 : 1 bis 1 : 5 liegt und wobei 1 bis 20 Gew.-% des Magnesiums, bezogen auf die Gesamtmenge des in dem Salzgemisch enthaltenen Magnesiums und jeweils gerechnet als elementares Magnesium, in Form wasserunlöslicher Magnesiumsalze vorliegen, bereitstellt und das Salzgemisch einem Granulierungsprozess in Gegenwart von zugesetztem Wasser unterwirft.

8. Verfahren nach Anspruch 7, **dadurch gekennzeichnet, dass** das Magnesiumsulfathydrat und das wasserunlösliche Magnesiumsalz als feste Reaktionsmischung bereitgestellt werden, die durch Umsetzung eines kaustischen Magnesiumoxids oder Magnesiumcarbonats mit einer unterstöchiometrischen Menge von Schwefelsäure erhältlich ist.

9. Verfahren nach Anspruch 8, wobei die Reaktionsmischung die wasserunlöslichen Magnesiumsalze in einer Menge von 0,5 bis 7 Gew.-%, bezogen auf das Gesamtgewicht der festen Reaktionsmischung und gerechnet als MgO, enthält und/oder wobei das Salzgemisch wasserunlösliche Magnesiumsalze in einer Menge von 3 bis 18 Gew.-%, bezogen auf die Gesamtmenge des in dem Salzgemisch enthaltenen Magnesiums und jeweils gerechnet als elementares Magnesium, enthält.

10. Verfahren nach einem der Ansprüche 7 bis 9, das mindestens eines der folgenden Merkmale (f), (g), (h) oder (i) aufweist:
(f) das Salzgemisch besteht zu mindestens 80 Gew.-%, bezogen auf die Gesamtmasse des Salzgemischs abzüglich des etwaig darin enthaltenen Wassers, aus Magnesiumsulfathydrat, dem wasserunlöslichen Magnesiumsalz und Harnstoff;
(g) die Hauptmenge Wasser wird dem Salzgemisch vor dem Granulierungsprozess oder zu Beginn des Granulierungsprozesses zugesetzt;
(h) die Menge an zugesetztem Wasser beträgt 1,5 bis 8 Gew.-%, bezogen auf die für die Granulierung verwendete Harnstoffmasse;
(i) mindestens 80 % des jeweiligen Harnstoffs weisen eine Teilchengröße im Bereich von 1 bis 1000 µm auf.

11. Verfahren nach einem der Ansprüche 7 bis 10, das als Pressgranulierung des Salzgemischs mit Hilfe einer Walzenpresse in Gegenwart von zugesetztem Wasser durchgeführt wird.

12. Verfahren nach Anspruch 11, bei dem man bei der Pressgranulierung das Salzgemisch, das ein Magnesiumsulfathydrat, ein wasserunlösliches Magnesiumsalz und teilchenförmigen Harnstoff enthält, durch Mischen bereitstellt, das erhaltene Salzgemisch einer Kompaktierungsgranulierung unterwirft, bei der man ein Granulat erhält, und anschließend das Granulat erhitzt und wobei das Granulat vorzugsweise auf eine Temperatur im Bereich von 50 bis 80 °C erhitzt wird.

13. Verfahren nach einem der Ansprüche 7 bis 10, das als Mischagglomerationsprozess mittels eines Intensivmischers, insbesondere eines Eirich-Mischers, durchgeführt wird.

14. Verfahren nach Anspruch 13, das mindestens eines der folgenden Merkmale (j), (k) oder (l) aufweist:
(j) die Agglomeration wird bei einer Temperatur im Bereich von 55 bis 80 °C durchgeführt;
(k) die Agglomeration wird so durchgeführt, dass die Reaktionsmischung im Verlauf der Agglomeration zeitweise eine sämige Form annimmt;
(l) zumindest ein Teil des in der Reaktionsmischung enthaltenen Wassers wird während der Agglomeration entfernt.

15. Verwendung eines Düngemittelgranulats nach einem der Ansprüche 1 bis 6 als Düngemittel oder in Düngemittelzusammensetzungen.

16. Verwendung nach Anspruch 15, wobei die NH₃-Emission des Düngemittelgranulats verringert ist.

## Revendications

1. Granulé d'engrais contenant du magnésium, du sulfate et de l'urée, chacun par rapport au poids total du granulé, dans les proportions suivantes :
de l'urée, à raison de 20,0 à 38,0 % en poids, calculée en azote élémentaire ;
du magnésium à raison de 1,5 à 9,5 % en poids, calculé en magnésium élémentaire ; et
du sulfate à raison de 2,7 à 12,0 % en poids, calculé en soufre élémentaire ;
dans lequel au moins une partie du magnésium, de l'urée et du sulfate est présente sous la forme d'au moins une des phases cristallines des formules (I) et (II)
MgSO₄*6NH₂-C(=O)-NH_{2*}-0.5H₂O (I)
MgSO₄*4NH₂-C(=O)-NH₂*H₂O (II)
et dans lequel 1 à 20 % en poids du magnésium, par rapport à la quantité totale de magnésium contenue dans le granulé d'engrais, calculé dans chaque cas en magnésium élémentaire, est présent sous la forme de sels de magnésium insolubles dans l'eau.

2. Granulé d'engrais selon la revendication 1, contenant du sulfate et de l'urée dans un rapport tel que le rapport massique de l'azote au soufre soit compris entre 1,8 : 1 et 10,5 : 1.

3. Granulé d'engrais selon la revendication 1 ou 2, dans lequel une partie du magnésium dans le granulé d'engrais est présente sous forme de sulfate de magnésium monohydraté, de sulfate de magnésium 5/4-hydraté ou d'un mélange de sulfate de magnésium monohydraté et de sulfate de magnésium 5/4-hydraté.

4. Granulé d'engrais selon l'une quelconque des revendications précédentes, dans lequel 3 à 18 % en poids du magnésium, par rapport à la quantité totale de magnésium contenue dans le granulé d'engrais, calculé dans chaque cas en magnésium élémentaire, est présent sous la forme de sels de magnésium insolubles dans l'eau.

5. Granulé d'engrais selon l'une quelconque des revendications précédentes, présentant au moins l'une des propriétés suivantes (a), (b), (c), (d) ou (e) :
(a) au moins 10 % en poids de l'urée contenue dans le granulé d'engrais est présente sous la forme d'au moins une des phases cristallines de formules (I) ou (II) ;
(b) au moins 70 % en poids des particules du granulé d'engrais ont une taille de particule comprise entre 2 et 10 mm ;
(c) la quantité totale de magnésium, de sulfate et d'urée est d'au moins 80 % en poids, par rapport à la masse totale du granulé d'engrais moins l'eau contenue dans celui-ci ;
(d) le granulé d'engrais contient en outre un oligo-élément du groupe comprenant le bore, le manganèse, le zinc, le cuivre, l'iode, le sélénium, le cobalt, le fer et le molybdène, de préférence en une quantité totale de 0,1 à 5,0 % en poids, par rapport à la masse totale du granulé d'engrais,
(e) le granulé d'engrais ne contient pas plus de 2 % en poids d'eau libre.

6. Granulé d'engrais selon l'une quelconque des revendications précédentes, dans lequel au moins une partie de l'urée dans les particules de granulé est présente sous forme de particules d'urée incorporées dans une matrice de sels de sulfate de magnésium.

7. Procédé de production d'engrais granulé selon l'une quelconque des revendications précédentes, comprenant la fourniture d'un mélange de sels contenant un sulfate de magnésium hydraté, un sel de magnésium insoluble dans l'eau et de l'urée particulaire, le rapport pondéral entre le poids total des sels de magnésium et l'urée étant compris entre 1,2 : 1 et 1 : 5 et dans lequel 1 à 20 % en poids du magnésium, par rapport à la quantité totale de magnésium contenue dans le mélange de sels, calculé dans chaque cas en magnésium élémentaire, est présent sous la forme de sels de magnésium insolubles dans l'eau, et la soumission du mélange de sels à un processus de granulation en présence d'eau ajoutée.

8. Procédé selon la revendication 7, dans lequel le sulfate de magnésium hydraté et le sel de magnésium insoluble dans l'eau sont fournis sous forme de mélange réactionnel solide pouvant être obtenu par réaction d'un oxyde de magnésium caustique ou de carbonate de magnésium avec une quantité sous-stœchiométrique d'acide sulfurique.

9. Procédé selon la revendication 8, dans lequel le mélange réactionnel contient les sels de magnésium insolubles dans l'eau à raison de 0,5 à 7 % en poids, par rapport au poids total du mélange réactionnel solide et calculé en MgO et/ou dans lequel le mélange de sels contient des sels de magnésium insolubles dans l'eau à raison de 3 à 18 % en poids, par rapport à la quantité totale de magnésium contenue dans le mélange de sels et calculée dans chaque cas en magnésium élémentaire.

10. Procédé selon l'une quelconque des revendications 7 à 9, présentant au moins l'une des caractéristiques suivantes (f), (g), (h) ou (i) :
(f) le mélange de sels est constitué d'au moins 80 % en poids, par rapport à la masse totale du mélange de sels moins l'eau contenue dans celui-ci, de sulfate de magnésium hydraté, de sel de magnésium insoluble dans l'eau et d'urée
(g) la majeure partie de l'eau est ajoutée au mélange de sels avant ou au début du processus de granulation ;
(h) la quantité d'eau ajoutée est comprise de 1,5 à 8 % en poids, par rapport à la masse d'urée utilisée pour la granulation ;
(i) au moins 80 % de l'urée particulaire a une taille de particule comprise entre 1 et 1 000 µm.

11. Procédé selon l'une quelconque des revendications 7 à 10, réalisé par granulation sous pression du mélange de sels au moyen d'une presse à rouleaux en présence d'eau ajoutée.

12. Procédé selon la revendication 11, dans lequel la granulation sous pression comprend la fourniture du mélange de sels contenant un sulfate de magnésium hydraté, un sel de magnésium insoluble dans l'eau et de l'urée particulaire par mélange, la soumission du mélange de sels obtenu à une granulation par compactage pour obtenir des granulés, puis le chauffage des granulés, les granulés étant de préférence chauffés à une température comprise entre 50 et 80 °C.

13. Procédé selon l'une quelconque des revendications 7 à 10, réalisé par agglomération mixte à l'aide d'un mélangeur intensif, notamment un mélangeur Eirich.

14. Procédé selon la revendication 13, présentant au moins l'une des caractéristiques suivantes (j), (k) ou (l) :
(j) l'agglomération est réalisée à une température comprise entre 55 et 80 °C ;
(k) le processus d'agglomération est réalisé de telle sorte que, au cours de l'agglomération, le mélange réactionnel acquiert temporairement une forme visqueuse ;
(l) au moins une partie de l'eau contenue dans le mélange réactionnel est éliminée pendant l'agglomération.

15. Utilisation d'un granulé d'engrais selon l'une quelconque des revendications 1 à 6, comme engrais ou dans des compositions d'engrais.

16. Utilisation selon la revendication 15, dans laquelle l'émission de NH₃ du granulé d'engrais est réduite.
